Europäisches Patentamt

European Patent Office

Office européen des brevets

(19)

(11) **EP 1 126 714 A2**

(12) ## EUROPEAN PATENT APPLICATION

(43) Date of publication:
**22.08.2001  Bulletin 2001/34**

(51) Int Cl.7: **H04N 7/173**

(21) Application number: **01101175.6**

(22) Date of filing: **24.01.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **24.01.2000  JP 2000014847**<br><br>(71) Applicant: **MATSUSHITA ELECTRIC INDUSTRIAL CO., LTD.**<br>**Kadoma-shi, Osaka 571-8501 (JP)** | (72) Inventor: **Matsui, Yoshinori**<br>**Ikoma-shi, Nara 630-0212 (JP)**<br><br>(74) Representative: **Balsters, Robert et al**<br>**Novapat International SA,**<br>**9, rue du Valais**<br>**1202 Genève (CH)** |

(54) **Data reception apparatus, data reception method, data transmission method, and data storage media**

(57)     A data reception apparatus is provided with a data request/reception unit for requesting media data corresponding to first and second foreground images from servers having the media data, and receiving a message from each servers; and a control data generation unit for controlling the data request/reception unit such that it issues a request message for each media data at a time by a predetermined latency time earlier than the display start time of each foreground image, on the basis of information indicating the latency time before starting display of the foreground image, which information is included in SMIL data indicating scene description. Therefore, each of the first and second foreground images can be combined with a background image and displayed at a time designated in the scene description.

Fig.5

**Description**

FIELD OF THE INVENTION

The present invention relates to data reception apparatuses, data reception methods, data transmission methods, and data storage media. More particularly, the invention relates to a transmission process of transmitting control data including a storage location and a playback start time of media data from a server distributing the media data, a reception process of accessing the server to receive and play the media data, and a data storage medium having a program for making a computer perform the above-mentioned transmission process and reception process.

BACKGROUND OF THE INVENTION

In recent years, with the advance of compressive coding technology for video data and audio data and the increase in data transmission capacity of networks such as the Internet and wireless networks, we can see services handling data such as video, audio, text, and the like, which are called media data.

These services have conventionally been distributed by a downloading scheme. In the downloading scheme, all of media data required for playback are downloaded from a server to a client terminal through a network and, after completion of the downloading, playback and display of the media data are performed at the client terminal.

Recently, the services handling the above-mentioned media data have come to adopt a streaming scheme instead of the downloading scheme. In the streaming scheme, reception of media data from a server at a client terminal through a network is performed in parallel with playback and display of the received media data at the client terminal.

Since, in the streaming scheme, playback and display of the media data are performed before reception of the media data is completed, the most striking characteristic of the streaming scheme is that a service adopting this scheme can reduce the latency time from when program data is requested to when playback and display of the program data are performed even when the service distributes a long-hours program.

In the future, services distributing media data as described above will go beyond playback and display of single media data such as video data or audio data, to be extended to services capable of simultaneous playback and display of plural pieces of media data, such as video data, still-picture data, text data, and the like.

Hereinafter, a description will be given of a process of simultaneously playing plural pieces of media data by the streaming scheme to display, for example, one background and two foregrounds at the same time.

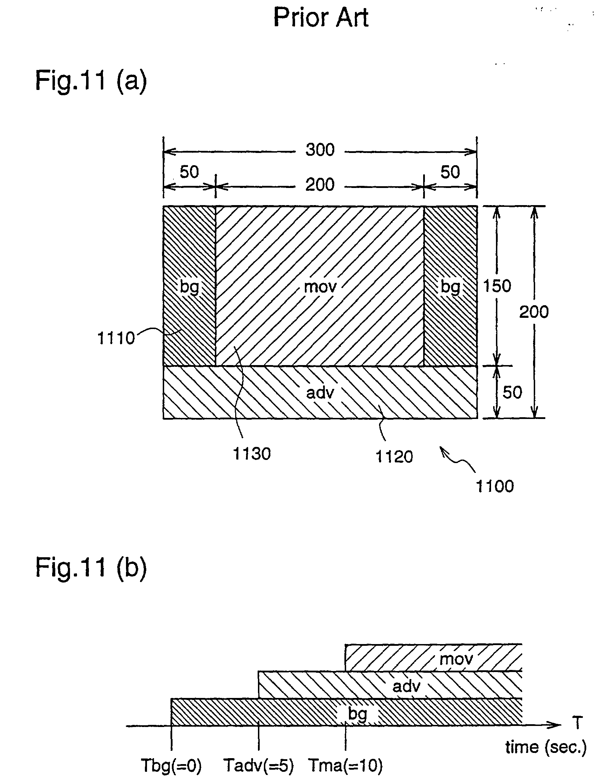

Figure 11(a) is a diagram for explaining the spatial arrangement of media data.

In figure 11(a), a predetermined image space 1100 is a rectangle background display region (bg region) 1110 where a background image (bg) is displayed. In the rectangle background display region 1110, there are a first rectangle foreground display region (adv region) 1120 where a first foreground image (adv) that is a picture of an advertisement or the like is placed, and a second rectangle foreground display region (mov region) 1130 where a second foreground image (mov) as a moving picture is placed.

For the predetermined image space 1100, a coordinate system indicating the positions in the image space 1100 is defined by the number of horizontal points corresponding to the number of pixels in the horizontal direction and the number of vertical points corresponding to the number of pixels in the vertical direction. For example, the upper left corner of the background display region (entire scene) 1110 is in a position where the number of horizontal points and the number of vertical points are 0. The size of the background display region (entire scene) 1110 in the horizontal direction (width) is 300 points, and the size of the background display region 1110 in the vertical direction (height) is 200 points. The upper left corner of the first foreground display region (adv region) 1120 is in a position where the number of horizontal points is 0 and the number of vertical points is 150. The size of the first foreground display region 1120 in the horizontal direction (width) is 300 points, and the size of the first foreground display region 1120 in the vertical direction (height) is 50 points. The upper left corner of the second foreground display region (mov region) 1130 is in a position where the number of horizontal points is 50 and the number of vertical points is 0. The size of the second foreground display region 1130 in the horizontal direction (width) is 200 points, and the size of the second foreground display region 1130 in the vertical direction (height) is 150 points.

Figure 11(b) is a diagram for explaining the temporal arrangement of the media data, showing the timings when the background image and the first and second foreground images are displayed in the predetermined image space.

In the temporal arrangement of the media data shown in figure 11(b), when a reference time T of the client terminal becomes a display start time Tbg (Tbg=0sec.) of the background image, the background image (bg) appears in the image space 1100. Further, when the reference time T of the client terminal becomes a display start time Tadv (Tadv=5sec.) of the first foreground image (adv), the first foreground image (adv) appears in the image space 1100. Further, when the reference time T of the client terminal becomes a display start time Tmov (Tmov=10sec.) of the second foreground image (mov), the second foreground image (mov) appears in the image space 1100.

In order to actually perform the process of simultaneously playing the plural pieces of media data for display at the client terminal, information (scene description data) for combining the respective media data (i.e., the background image (bg), the first foreground image (adv), and the second foreground image (mov)) is required. The scene description data designates the temporal arrangement (refer to figure 11(b)) and the spatial arrangement (refer to figure 11(a)) of the respective media data. Further, there is scene description data whose contents are described with a language standardized by W3C (World Wide Web Consortium), such as "SMIL (Synchronized Multimedia Integration Language)" or "HTML (Hyper Text Markup Language) + TIME (Timed Interactive Multimedia Extensions)".

Hereinafter, a description will be given of the SMIL as one of the languages expressing the scene description data.

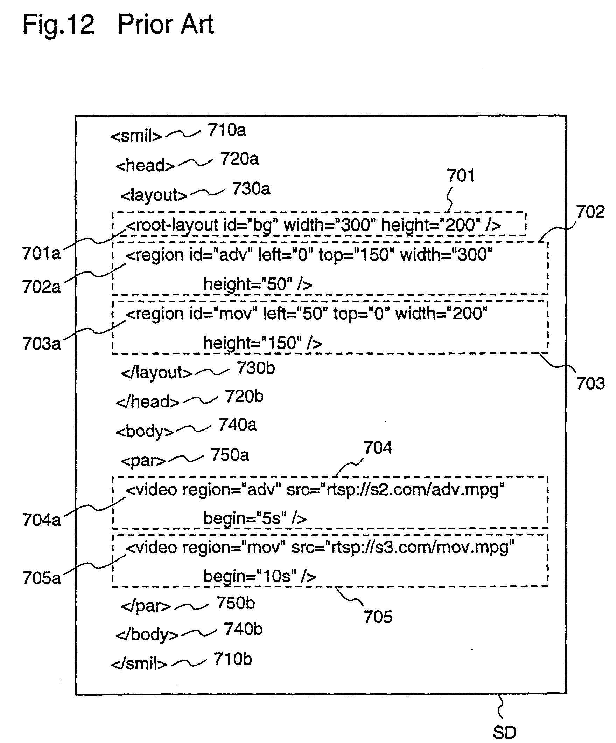

Figure 12 is a diagram for explaining an example of contents of scene description data according to the SMIL.

In figure 12, character strings described at the heads of the respective rows of the scene description SD, i.e., <smil>, </smil>, <head>, </head>, <layout>, </layout>, <root-layout>, <region>, <body>, <par>, </par>, <video>, and the like are called "elements", and declare the contents of descriptions which follow the elements.

For example, the smil element and the /smil element declare that the rows positioned between the row 710a including the smil element and the row 710b including the /smil element are described according to the SMIL. The head element and the /head element declare that the rows positioned between the row 720a including the head element and the row 720b including the /head element describe information for defining the regions where the respective images (bg), (adv), and (mov) are placed in the image space shown in figure 11(a). Further, the layout element and the /layout element declare that the rows 701 to 703 including information relating to the positions of the background image and the foreground images to be played in parallel with each other (at the same time) are placed between the row 730a including the layout element and the row 730b including the /layout element.

Furthermore, the root-layout element 701a declares that the description in the row 701 including this element designates the image to be displayed as the background image (entire scene) and designates the size of the background image. The region element 702a (703a) declares that the description in the row 702 (703) including this element designates the size of one rectangle region where the foreground image is placed, and the position of the rectangle region in the entire scene (image space).

The body element and the /body element declare that the rows positioned between the row 740a including the body element and the row 740b including the /body element describe information (URL) indicating the location of the media data to be played and information relating to the time when the media data is to be displayed. Further, the par element and the /par element declare that the rows 704 and 705 including media elements and attribute information relating to the media data to be played in parallel with each other (at the same time) are grouped and placed between the row 750a including the par element and the row 750b including the /par element.

Each of the video elements 704a and 705a declares that the description in the row including this element designates video data.

Furthermore, character strings "id", "width", "height", "left", "top", "src", "begin", and the like which follow the above-mentioned root-layout element, region element, and video element are called "attributes", and designate detailed information in the rows including the respective elements.

To be specific, the id attributes in the rows 701, 702, and 703 including the root-layout element, the region element, and the region element designate the media data, i.e., the background image, the first foreground image, and the second foreground image, respectively.

Further, the width attribute and the height attribute in the row 701 including the root-layout element 701a designate the width and the height of the background image (entire scene), and the size of the background (entire scene) is designated such that the width is 300 points (width="300") and the height is 200 points (height="200").

Further, the width attribute and the height attribute in the row 702 (703) including the region element 702a (703a) designate the height and the width of the corresponding rectangle region, and the left attribute and the top attribute designate the position of the upper left corner of the rectangle region with respect to the upper left corner of the entire scene.

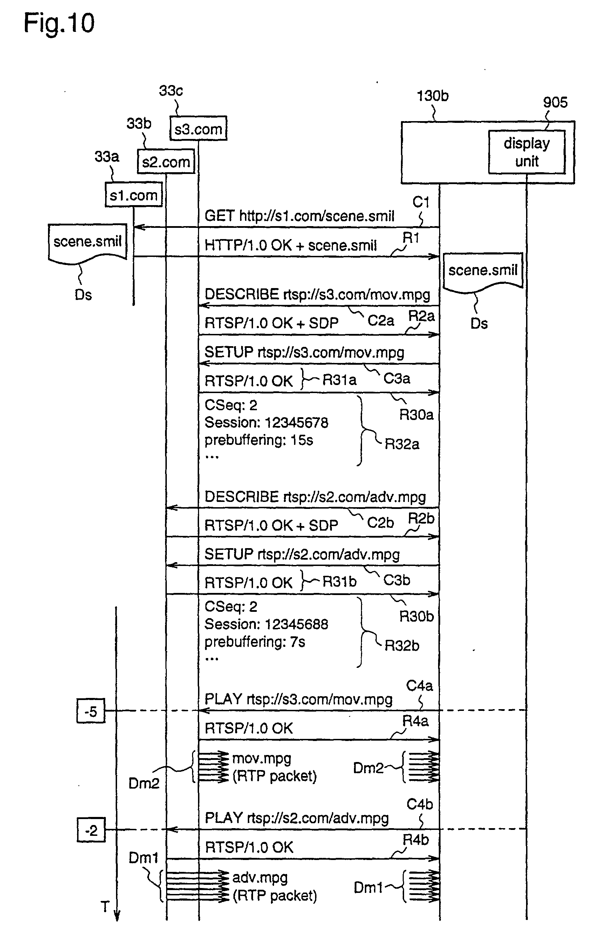

For example, in the row 702 including the region element, the id attribute (id=adv) designates the first rectangle region 1120 (refer to figure 10(a)) where the media data corresponding to the region attribute value (region=adv) is displayed. The position of the upper left corner of this first rectangle region is designated by the left attribute (left=0) and the top attribute (top=150), that is, it is set at a distance of 0 point in the horizontal direction and 150 points in the vertical direction from the upper left corner of the image space as a reference point. Further, the size of this first rectangle region is designated by the width attribute (width=300) and the height attribute (height=50), that is, the first rectangle region is 300 points wide and 50 points long.

In the row 703 including the region element, the id attribute (id=mov) designates the second rectangle region 1130 (refer to figure 11(a)) where the media data corresponding to the region attribute value (region=mov) is displayed. The position of the upper left corner of this second rectangle region is designated by the left attribute (left=50) and the top attribute (top=0), that is, it is set at a distance of 50 points in the horizontal direction and 0 point in the vertical direction from the upper left corner of the image space as a reference point. Further, the size of this second rectangle region is designated by the width attribute (width=200) and the height attribute (height=150), that is, the second rectangle region is 200 points wide and 150 points long.

The arrangement information described in the row 702 including the region element is adapted to the media data which is designated by the region attribute value (region=adv) in the row 704 including the video element, and the arrangement information described in the row 703 including the region element is adapted to the media data which is designated by the region attribute value (region=mov) in the row 705 including the video element.

Further, the src attribute in the row 704 (705) including the video element 704a (705a) designates the transmission scheme and the storage location of the media data on the server. The information designated by the src attribute is required to request media data from the server because the SMIL data is not provided with the media data such as video.

In the row 704 (705) including the video element, rtsp (real time streaming protocol), which is a protocol (procedure) for exchanging a data request message between the transmitting end and the receiving end, is designated as a transmission scheme. In the row 704 including the video element, data (adv.mpg) stored in a server (s2.com) is designated as media data corresponding to the first foreground image (adv). In the row 705 including the video element, data (mov.mpg) stored in a server (s3.com) is designated as media data corresponding to the second foreground image (mov).

Therefore, at the client terminal, messages requesting the media data (adv.mpg) and the media data (mov.mpeg) are issued to the server (s2.com) and the server (s3.com) designated by the descriptions in the rows 704 and 705 including the video elements, respectively, by using the RTSP (Real Time Streaming Protocol) which is the media data transmission protocol (procedure). The media data are transmitted and received by using the RTP (Realtime Transport Protocol).

Furthermore, the begin attribute in the row 704 (705) including the video element designates the time to start display of the media data in the case where the time to start display of the scene is a starting point (0 sec.). The temporal arrangement of each media data depends on the begin attribute and the like. In the description in the row 704 including the video element, the begin attribute is set at 5 sec. (being="5"). That is, the temporal arrangement of the first foreground image is designated such that display of this image will be started five seconds after display of the scene is started. In the description in the row 705 including the video element, the begin attribute is set at 10 sec. (begin="10"). That is, the temporal arrangement of the second foreground image is designated such that display of this image will be started ten seconds after display of the scene is started.

Next, a description will be given of a conventional data reception apparatus mounted on a personal computer as an example of the above-mentioned client terminal.

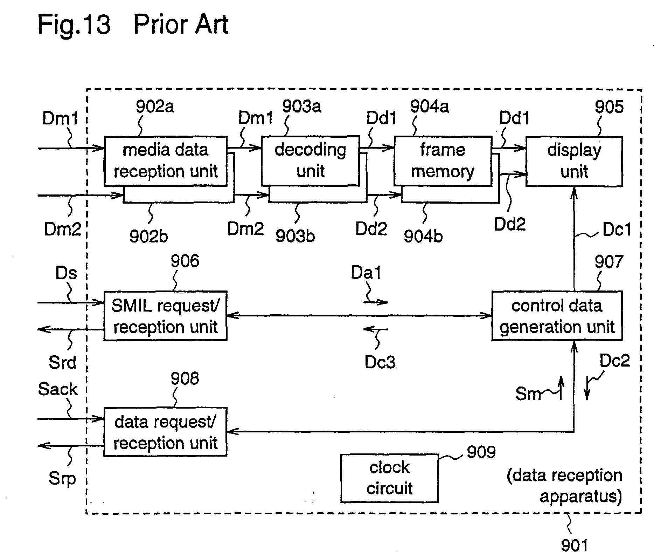

Figure 13 is a block diagram for explaining the data reception apparatus.

The data reception apparatus 901 obtains, as scene description data, SMIL data shown in figure 11 from the server, and obtains media data designated by the SMIL data from the server, and performs playback and display of the obtained media data.

To be specific, the data reception apparatus 901 includes a plurality of data reception units 902a and 902b for receiving image data (media data) Dm1 and Dm2 corresponding to the respective images constituting a scene, and outputting these image data; a plurality of image decoding units 903a and 903b for decoding the image data Dm1 and Dm2 outputted from the respective data reception units 902a and 902b to output decoded image data Dd1 and Dd2; a plurality of frame memories 904a and 904b for storing, in units of frames, the decoded image data Dd1 and Dd2 supplied from the respective image decoding units 903a and 903b; and a display unit 905 for receiving the decoded image data Dd1 and Dd2 read from the respective frame memories 904a and 904b, and combining the image data corresponding to the respective images to construct one scene, on the basis of control data Dc1, and displaying the scene.

The data reception unit 901 further includes an SMIL request/reception unit 906 for outputting an SMIL request signal Srd to request SMIL data Ds from a predetermined remote server on the basis of the third control data Dc3, and receiving the SMIL data Ds from the remote server to analyze it; a control data generation unit 907 for receiving SMIL analysis data Da obtained by the analysis on the SMIL data, and storing, as first control data Dc1, information relating to spatial arrangement and temporal arrangement of each image corresponding to each video element, and storing, as second control data Dc2, information relating to a transmission scheme and a storage place for the image data (media data) corresponding to each image; a data request/reception unit 908 for outputting a data request signal Sr to request image data from the remote server on the basis of the control data Dc2 from the data generation unit 907, receiving an acknowledge signal Sack to the request, and outputting data Sm obtained from the acknowledge signal, to the data generation unit 907; and a clock circuit 909 for providing the respective components of the data reception apparatus 901 with time information.

The data reception apparatus 901 possesses the data reception units, the image decoding units, and the frame memories as many as the number of image data (media data) to be received. The data request/reception unit 908 requests scene description data for playing a predetermined scene, according to user operation.

Hereinafter, the operation of the data reception apparatus 901 will be described.

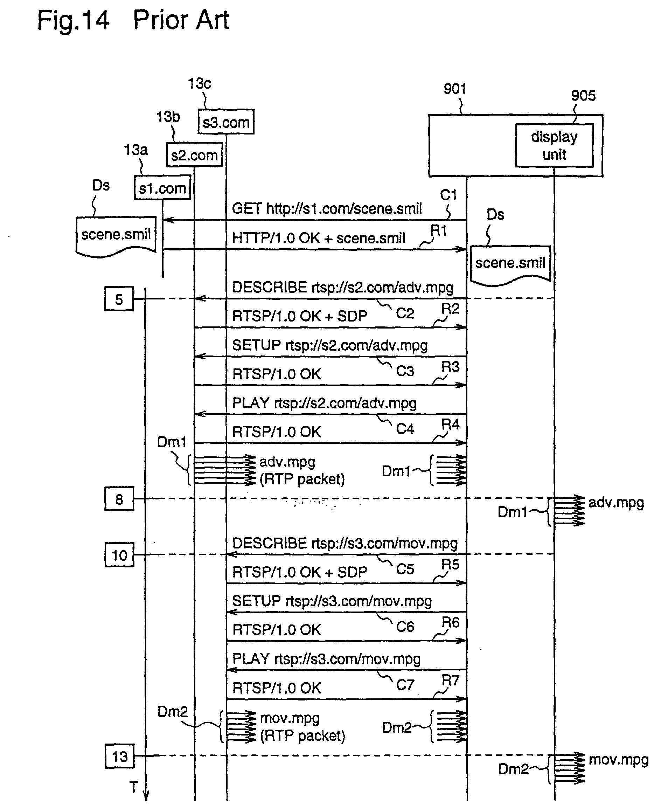

Figure 14 is a diagram for explaining the flow of a procedure by which the data reception apparatus 901 obtains media data from the server, illustrating an example of RTSP (Realtime Transport Streaming Protocol).

It is assumed that the data reception apparatus 901 is mounted on a personal computer as a client terminal, and the data reception apparatus 901 is supplied with the SMIL data shown in figure 12 as scene description data SD.

When the user, who is viewing a home page described by HTML (Hyper Text Markup Language) using a Web browser installed on the personal computer, clicks a region on the home page linked to predetermined SMIL data Ds, the data reception apparatus 901 of the client terminal issues an SMIL request command (GET http://sl.com/scene.smil) C1 for requesting the SMIL data Ds. This command C1 requests the server (sl.com) 13a to distribute the SMIL data by HTTP.

On receipt of the SMIL request command C1, the server 13a issues an acknowledge (HTTP/1.0 OK) indicating that the command has been accepted, to the client terminal, and transmits the SMIL data (scene.sml) Ds to the client terminal.

In the data reception apparatus 901 of the client terminal, the SMIL request/reception unit 906 receives the SMIL data Ds, and analyzes the SMIL data Ds.

The SMIL analysis data Da obtained by the analysis on the SMIL data is stored in the control data generation unit 907.

That is, the control data generation unit 907 holds information relating to the size of the background image (entire scene) described as the root-layout element, or information relating to the src attribute, top attribute, left attribute, width attribute, height attribute, and begin attribute, described as the video element. To be specific, the src attribute information includes information indicating the storage place of each image data, and each of the top attribute information and the left attribute information includes information about the position of the rectangle region where the foreground image is placed, with the upper left edge of the scene as a reference point. The width attribute information and the height attribute information include information about the size (width and height) of the rectangle region in the horizontal direction and the vertical direction, respectively. The begin attribute information includes a display start time to start display of the media data corresponding to each video element.

The display unit 905 starts the process of creating a scene and displaying it, on the basis of the contents stored in the control data generation unit 907. To be specific, the background image (bg) corresponding to the root-layout element is displayed over the image space 1100 upon starting the display process. At this time, the time information outputted from the clock circuit 909 is set at zero.

Since, in the SMIL data Ds, the display start time of the first foreground image (adv) is set at five seconds and the display start time of the second foreground image (mov) is set at ten seconds, the display unit 905 does not perform the process of combining the image data with reference to the frame memories 904a and 904b, during the period from 0 second to five seconds.

When the time information outputted from the clock circuit 909 becomes 5 seconds, exchange of a message requesting the image data (adv.mpg) corresponding to the first foreground image is performed between the data request/reception unit 908 and the second server (s2.com) 13b, on the basis of the src attribute of the video element 704 stored in the control data generation unit 907, by using RTSP (Real Time Streaming Protocol) as a communication protocol. Thereafter, the server transmits the image data (adv.mpg) using RTP (Realtime Transport Protocol).

To be specific, as shown in figure 14, the data reception apparatus 901 of the client terminal issues a command (DESCRIBE rtsp://s2.com/adv.mpg) C2 requesting specific information relating to the media data corresponding to the first foreground image (adv) (e.g., coding condition, existence of plural candidate data, etc.), to the second server (s2.com) 13b.

On receipt of the command C2, the second server 13b issues an acknowledge (RTSP/1.0 OK) R2 indicating that the command has been accepted, to the client terminal, and transmits SDP (Session Description Protocol) information to the client terminal.

Next, the data reception apparatus 901 of the client terminal issues a setup request command (SETUP rtsp://s2.com/ adv.mpg) C3 which requests the second server (s2.com) 13b to set up provision of the media data corresponding to the first foreground image (adv), to the second server 13b. Upon completion of setup for the media data, the second server 13b issues an acknowledge (RTSP/1.0 OK) R3 indicating that the command C3 has been accepted, to the client terminal.

When the data reception apparatus 901 of the client terminal issues a data request command (PLAY rtsp://s2.com/adv.mpg) C4 requesting the media data corresponding to the first foreground image (adv), to the second server (s2.com) 13b, the second server 13b issues an acknowledge (RTSP/1.0 OK) R4 indicating that the command C4 has been accepted, to the client terminal. Thereafter, the second server 13b stores the media data Dm1 corresponding to the first foreground image (adv.mpg) in RTP packets, and successively transmits the RTP packets to the client terminal.

The media data Dm1 is received by the corresponding data reception unit 902a to be output to the corresponding image decoding unit 903a. The image decoding unit 903a decodes the media data, and the decoded media data Dd1 is stored in the corresponding frame memory 904a in units of frames. At this point of time, playback of the media data Dm1 becomes possible. However, three seconds have passed from when the client terminal started the request for the media data Dm1 from the server (i.e., when the output of the counter was five seconds) to when the client terminal and the server exchange the message.

In this way, since the client terminal exchanges the message with the server to obtain the media data from the server, the time when playback of the first foreground image at the client end becomes possible is behind the display start time of the first foreground image described in the SMIL data.

Therefore, in the display unit 905, the first foreground image is displayed when three seconds have passed from the display start time of the first foreground image described in the SMIL data.

That is, when the time information from the clock circuit 909 reaches 8 seconds, it is judged whether one frame of decoded image data of the foreground image is stored in the frame memory 904a or not. When one frame of decoded image data is stored, the first foreground image is superimposed on the background image for display.

When the image data are video data, the image data are successively input to the data reception unit 902a and successively decoded by the image decoding unit 903a, and the decoded image data are successively stored in the frame memory 904a in units of frames. In the display unit 905, the image data corresponding to the respective frames, which are stored in the frame memory 904a, are successively combined with the data of the background image for display.

When the time information outputted from the clock circuit 909 reaches 10 seconds, exchange of a message requesting the image data (mov.mpg) corresponding to the second foreground image is performed between the data request/reception unit 908 and the third server (s3.com) 13c, on the basis of the src attribute of the video element 705a stored in the control data generation unit 907, by using RTSP (Real Time Streaming Protocol) as a communication protocol. Thereafter, the server transmits the image data (mov. mpg) by using RTP (Realtime Transport Protocol).

To be specific, as shown in figure 14, the data reception apparatus 901 of the client terminal issues a command (DESCRIBE rtsp://s3.com/mov.mpg) C5 requesting specific information relating to the media data corresponding to the second foreground image (mov) (e.g., coding condition, existence of plural candidate data, etc.), to the third server (s3.com) 13c.

On receipt of the command C5, the third server 13c issues an acknowledge (RTSP/1.0 OK) R5 indicating that the command has been accepted, to the client terminal, and transmits SDP (Session Description Protocol) information to the client terminal.

Next, the data reception apparatus 901 of the client terminal issues a setup request command (SETUP rtsp://s3.com/ mov.mpg) C6 requesting the third server (s3.com) 13c to set up provision of the media data (image data) corresponding to the second foreground image (mov). Upon completion of setup for the media data, the third server 13c issues an acknowledge (RTSP/1.0 OK) R3 indicating that the command C6 has been accepted, to the client terminal.

When the data reception apparatus 901 of the client terminal issues a data request command (PLAY rtsp://s3.com/adv.mpg) C7 requesting the media data corresponding to the second foreground image (mov), to the third server (s3.com) 13c, the third server 13c issues an acknowledge (RTSP/1.0 OK) R7 indicating that the command C7 has been accepted, to the client terminal. Thereafter, the third server 13c stores the media data Dm2 corresponding to the second foreground image (mov.mpg) in RTP packets, and successively transmits the RTP packets to the client terminal.

The media data Dm2 is received by the corresponding data reception unit 902b to be output to the corresponding image decoding unit 903b. The image decoding unit 903 decodes the media data Dm2 in like manner as the decoding process for the media data Dm1, and the decoded media data Dd is stored in the corresponding frame memory 904b in units of frames. At this point of time, playback of the media data Dm2 becomes possible. However, a predetermined time has passed from when the client terminal started the request for the media data Dm2 from the server (i.e., when the output of the counter was ten seconds) to when the client terminal and the server exchange the message.

In this way, since the client terminal exchanges the message with the server to obtain the media data from the server, the time when playback of the second foreground image at the client end becomes possible is behind the display start time of the second foreground image described in the SMIL data.

Therefore, in the display unit 905, the second foreground image is displayed when three seconds have passed from the display start time of the second foreground image described in the SMIL data.

At this time, in the display unit 905, the background image (bg) is displayed in the background display region 1110 in the image space 1100 (refer to figure 11(a)), the first foreground image (adv) is displayed in the first foreground display region 1120, and the second foreground image (mov) is displayed in the second foreground display region 1130. That is, a composite image comprising the background image (bg) and the first and second foreground images (adv and mov) is displayed in the image space 1100.

However, the conventional data reception apparatus 901, which issues the image data request message to the server on the basis of the contents of the SMIL scene description, has the following drawbacks.

In the scene description, the begin attribute attached to the first video element 704a indicates that the start time of the process to display the first foreground image (adv) is when five seconds have passed from the display start time of the entire scene. Further, the begin attribute attached to the second video element 705a indicates that the start time of the process to display the second foreground image (mov) is when ten seconds have passed from the display start time of the entire scene. Therefore, in the conventional data reception apparatus 901 mounted on the client terminal (reception terminal), the data request message requesting the image data corresponding to the first foreground image is issued to the second server 13b when five seconds have passed after the display start time of the entire scene, and the data request message requesting the image data corresponding to the second foreground image is issued to the third server 13c when ten seconds have passed after the display start time of the entire scene.

In this case, there is a delay from when the client terminal requests the image data from the server to when the image data from the server becomes displayable at the client terminal. For example, this delay corresponds to the time required for the message exchange by RTSP between the server and the client terminal, or the time required for handling the command from the client terminal at the server.

So, in the conventional data reception apparatus 901, when a predetermined latency time (in this case, three seconds) has passed from the start time of data request to the server, image display is performed on the basis of the image data stored in the frame memory.

As the result, in the data reception apparatus 901, it is difficult to display the media data corresponding to each video element at the time designated by the scene description, i.e., at the time indicated by the begin attribute included in the video element.

Further, the time required from the request for the image data to the storage of the image data in the frame memory depends on the network condition, the number of messages to exchange, and the like. Thereby, the temporal relationship in positions between plural image data varies, resulting in difficulty in maintaining synchronization between the plural image data.

For example, according to the scene description Sd shown in figure 12, display of the image corresponding to the second video element 705 should be started five seconds after display of the first video element 704 is started. However, when the time from when the data reception apparatus 901 requests the image data from the server to when the image data is actually stored in the frame memory of the apparatus 901 varies due to various factors such as congestion of the network, there is the possibility that the image corresponding to the video element 705 is not displayed after five seconds from when display of the image corresponding to the video element 704 is started. This situation will be a serious problem when the scene is a composite image comprising plural image data relating with each other.

Furthermore, when the media data is transmitted through a network for which a band width (i.e., a constant data transmission rate) is not assured like the Internet, the image decoding unit of the data reception apparatus 901 must wait several seconds ~ ten and several seconds until a predetermined quantity of received image data is stored in the data buffer, before starting decoding on the received image data. The process of storing a predetermined quantity of received image data in the data buffer of the data reception unit until decoding on the image data is started by the image decoding unit is called "prebuffering".

When the prebuffering is not performed, the decoding process in the data reception apparatus is easily affected by jitter in the network (fluctuations in transmission rate). For example, when decoding is performed for every predetermined quantity of image data, image data to be decoded are not stored by the time to perform decoding, resulting in the state where playback of the image data is interrupted.

Accordingly, when the time required for exchange of messages with the server or prebuffering is considered, the conventional data reception apparatus 901, which issues a message requesting each image data to the server at the display time of the image data described in the SMIL data, cannot perform normal scene playback according to the scene description.

Moreover, an appropriate prebuffering time varies for every bit stream corresponding to each image data (coded data of each image data). Therefore, the reception terminal (data reception apparatus) cannot set an appropriate prebuffering time, resulting in the possibility that excess or deficiency of image data in the buffer of the data reception unit (i.e., overflow or underflow of the buffer) may occur during decoding on the image data.

SUMMARY OF THE INVENTION

The present invention is made to solve the above-mentioned problems and has for its object to provide a data reception apparatus, a data reception method, and a data transmission method, by which playback and display of plural images constituting a scene can be started on times designated by scene description data, and playback and display of image data can be performed without interruption regardless of jitter in the network.

It is another object of the present invention to provide a data storage medium containing a program for making a computer perform data reception according to the above-mentioned data reception method.

Other objects and advantages of the invention will become apparent from the detailed description that follows. The detailed description and specific embodiments described are provided only for illustration since various additions and modifications within the scope of the invention will be apparent to those of skill in the art from the detailed description.

According to a first aspect of the present invention, there is provided a data reception apparatus for obtaining media data which is any of video data, audio data, and text data, and corresponds to plural elements constituting a scene, from data sources on a network, and playing the obtained media data to display the scene. This apparatus comprises a first reception unit for receiving location information indicating the locations of the data sources having the respective media data on the network, first time information indicating the playback start times of the respective media data, and second time information for requesting the respective media data from the corresponding data source; a time setting unit for setting a data request time to make a request for each media data to the corresponding data source, at a time by a specific time set for each media data earlier than the playback start time of the media data, on the basis of the first and second time information; a data request unit for making a request for each media data to the data source indicating by the location information, at the data request time set by the time setting unit; and a second reception unit for receiving the media data supplied from the data source according to the request from the data request unit. Therefore, playback of each media data can be started on time as designated at the transmitting end.

According to a second aspect of the present invention, in the data reception apparatus of the first aspect, the first reception unit receives, as the second time information, time information indicating a latency time from when each media data is received to when the media data is played; and the time setting unit sets the data request time for each media data, at a time by the latency time earlier than the playback start time of the media data. Therefore, the data reception apparatus can obtain each media data from a predetermined data source on the network, within the latency time before playback of the media data. Furthermore, by setting the latency time at a sufficiently large value considering the condition of the network through which the media data is transmitted (e.g., band width, congestion, etc.), playback of the media data by the data reception apparatus is hardly affected by jitter in the network, thereby preventing the image display from being interrupted during playback of the media data.

According to a third aspect of the present invention, in the data reception apparatus of the first aspect, the first reception unit receives, as the second time information, time information indicating a time to make a request for each media data to the corresponding data source; and the time setting unit sets the data request time for each media data, at the time indicated by the second time information. Therefore, the data reception apparatus can obtain each media data from a predetermined data source on the network, within the time from the data request time to the playback start time. Furthermore, by setting the data request time at a time sufficiently earlier than the data playback start time considering the condition of the network through which the media data is transmitted (e.g., band width, congestion, etc.), playback of the media data by the data reception apparatus is hardly affected by jitter in the network, thereby preventing the image display from being interrupted during playback of the media data.

According to a fourth aspect of the present invention, in the data reception apparatus of the first aspect, the first reception unit receives, as the second time information, time information indicating a latency time from when each media data is received to when the media data is played; and the time setting unit sets the data request time for each media data, at a time by the sum of the latency time and a predetermined time earlier than the playback start time of the media data.

Therefore, playback of each media data can be started on time as designated at the transmitting end. Further, playback of media data at the receiving end is hardly affected by jitter in the network, thereby preventing image display from being interrupted during playback of the media data.

According to a fifth aspect of the present invention, in the data reception apparatus of the first aspect, the first reception unit receives, as the second time information, time information indicating a time to make a request for each media data to the corresponding data source; and the time setting unit sets the data request time for each media data, at a time by a predetermined time earlier than the time indicated by the second time information. Therefore, playback of each media data can be started on time as designated at the transmitting end. Further, playback of media data at the receiving end is hardly affected by jitter in the network, thereby preventing image display from being interrupted during playback of the media data.

According to a sixth aspect of the present invention, there is provided a data reception method for obtaining media data which is any of video data, audio data, and text data, and corresponds to plural elements constituting a scene, from data sources on a network, and playing the obtained media data to display the scene. This method comprises a first reception step of receiving location information indicating the locations of the data sources having the respective media data on the network, first time information indicating the playback start times of the respective media data, and second time information for requesting the respective media data from the corresponding data sources; a data request step of making a request for each media data to the data source indicating by the location information, at a time by a specific time set for each media data earlier than the playback start time of the media data, on the basis of the first and second time information; and a second reception step of receiving the media data supplied from the data source according to the request made in the data request step. Therefore, playback of media data corresponding to each of elements constituting a scene can be started on time as designated at the transmitting end.

According to a seventh aspect of the present invention, in the data reception method of the sixth aspect, the first reception step receives, as the second time information, time information indicating a latency time from when each media data is received to when the media data is played; and the data request step makes a request for each media data to a predetermined data source, at a time by the latency time earlier than the playback start time of the media data. Therefore, the receiving end can obtain each media data from a predetermined data source on the network, within the latency time before playback of the media data. Furthermore, by setting the latency time at a sufficiently large value considering the condition of the network through which the media data is transmitted (e.g., band width, congestion, etc.), playback of the media data at the receiving end is hardly affected by jitter in the network, thereby preventing the image display from being interrupted during playback of the media data.

According to an eighth aspect of the present invention, in the data reception method of the sixth aspect, the first reception step receives, as the second time information, time information indicating a data request time to make a request for each media data to the corresponding data source; and the data request step makes a request for each media data to the data source, at the data request time. Therefore, the receiving end can obtain each media data from a predetermined data source on the network, within the time from the data request time to the playback start time. Furthermore, by setting the data request time at a time sufficiently earlier than the data playback start time considering the condition of the network through which the media data is transmitted (e.g., band width, congestion, etc.), playback of media data at the receiving end is hardly affected by jitter in the network, thereby preventing the image display from being interrupted during playback of the media data.

According to a ninth aspect of the present invention, in the data reception method of the sixth aspect, the first reception step receives, as the second time information, time information indicating a latency time from when each media data is received to when the media data is played; and the data request step makes a request for each media data to a predetermined data source, at a time by the sum of the latency time and a predetermined time earlier than the playback start time of the media data. Therefore, playback of each media data can be started on time as designated at the transmitting end. Further, playback of media data at the receiving end is hardly affected by jitter in the network, thereby preventing image display from being interrupted during playback of the media data.

According to a tenth aspect of the present invention, in the data reception method of the sixth aspect, the first reception step receives, as the second time information, time information indicating a data request time to make a request for each media data to the corresponding data source; and the data request step makes a request for each media data to the data source, at a time by a predetermined time earlier than the data request time. Therefore, playback of each media data can be started on time as designated at the transmitting end. Further, playback of media data at the receiving end is hardly affected by jitter in the network, thereby preventing image display from being interrupted during playback of the media data.

According to an eleventh aspect of the present invention, there is provided a data transmission method for transmitting media data which is any of video data, audio data, and text data and corresponds to plural elements constituting a scene, to a reception terminal for playing the media data to display the scene. This method comprises a first transmission step of transmitting location information indicating the locations of data sources having the respective media data on a network, first time information indicating the playback start times of the respective media data, and second time information for requesting the respective media data from the corresponding data sources; and a second transmission step of transmitting the media data to the reception terminal, according to the request for the media data which is issued from the reception terminal on the basis of the first and second time information and the location information. Therefore, the receiving end can obtain each media data from a predetermined data source on the network, on the basis of the second time information, before playback of the media data, to start playback of the media data on time as designated at the transmitting end.

According to a twelfth aspect of the present invention, in the data transmission method of the eleventh aspect, the second time information is time information indicating a latency time from when each media data is received to when the media data is played. Therefore, the receiving end can obtain each media data from a predetermined data source on the network, within the latency time before playback of the media data. Furthermore, by setting the latency time at a sufficiently large value considering the condition of the network through which the media data is transmitted (e.g., band width, congestion; etc.), playback of the media data at the receiving end is hardly affected by jitter in the network, thereby preventing the image display from being interrupted during playback of the media data.

According to a thirteenth aspect of the present invention, in the data transmission method of the eleventh aspect, the second time information is time information indicating a data request time to make a request for each media data to the corresponding data source. Therefore, the receiving end can obtain each media data from a predetermined data source on the network, within the time from the data request time to the playback start time. Furthermore, by setting the data request time at a time sufficiently earlier than the data playback start time considering the condition of the network through which the media data is transmitted (e.g., band width, congestion, etc.), playback of media data at the receiving end is hardly affected by jitter in the network, thereby preventing the image display from being interrupted during playback of the media data.

According to a fourteenth aspect of the present invention, there is provided a data storage medium containing a data playback program to make a computer perform a data playback process of obtaining media data which is any of video data, audio data, and text data, and corresponds to plural elements constituting a scene, from data sources on a network, and playing the obtained media data to display the scene. This data playback program comprises a first program to make the computer perform a first process of receiving location information indicating the locations of the data sources having the respective media data, first time information indicating the playback start times of the respective media data, and second time information for requesting the respective media data from the corresponding data sources; a second program to make the computer perform a second process of making a request for each media data to the data source indicating by the location information, at a time by a specific time set for each media data earlier than the playback start time of the media data, on the basis of the first and second time information; and a third program to make the computer perform a third process of receiving the media data supplied from the data source according to the data request. Therefore, the receiving end is permitted to perform, by software, the process of playing media data corresponding to each of elements constituting a scene on time as designated at the transmitting end.

According to a fifteenth aspect of the present invention, there is provided a data storage medium which contains a data transmission program to make a computer perform a data transmission process of transmitting media data which is any of video data, audio data, and text data and corresponds to plural elements constituting a scene, to a reception terminal for playing the media data to display the scene. This data transmission program comprises a first program to make the computer perform a first process of transmitting location information indicating the locations of data sources having the respective media data on a network, first time information indicating the playback start times of the respective media data, and second time information for requesting the respective media data from the corresponding data sources; and a second program to make the computer perform a second process of transmitting the media data to the reception terminal, according to the request for the media data which is issued from the reception terminal on the basis of the first and second time information and the location information. Therefore, the transmitting end is permitted to perform, by software, the process of transmitting each media data to the receiving end so that playback of the media data at the receiving end is performed on time as designated by the transmitting end.

BRIEF DESCRIPTION OF THE DRAWINGS

Figure 1 is a block diagram for explaining a data reception apparatus according to a first embodiment of the present invention.

Figure 2 is a diagram illustrating the contents (scene description) of SMIL data supplied to the data reception apparatus of the first embodiment.

Figures 3(a) and 3(b) are diagrams illustrating the spatial arrangement (3(a)) and the temporal arrangement (3(b)) of media data on the basis of the SMIL data supplied to the data reception apparatus of the first embodiment.

Figure 4 is a diagram illustrating a time table which is created by a control data recording unit 103 included in the data reception apparatus of the first embodiment.

Figure 5 is a diagram for explaining the flow of procedure to obtain media data from a server by the data reception apparatus of the first embodiment.

Figure 6 is a flowchart illustrating the process of calculating the time to issue a media data request command, in the data reception apparatus of the first embodiment.

Figure 7 is a block diagram for explaining a data reception apparatus according to a second embodiment of the present invention.

Figure 8 is a diagram illustrating the contents (scene description) of SMIL data supplied to the data reception apparatus of the second embodiment.

Figure 9 is a diagram for explaining, as a data transmission method according to the present invention, a method of transmitting information indicating a prebuffering time (latency time), which information is included in SDP.

Figure 10 is a diagram for explaining, as a data transmission method according to the present invention, a method of transmitting information indicating a prebuffering time (latency time), which information is included in an acknowledge to a SETUP request of RTSP.

Figures 11(a) and 11(b) are diagrams illustrating the spatial arrangement (11(a)) and the temporal arrangement (11(b)) of media data on the basis of SMIL data supplied to a conventional data reception apparatus.

Figure 12 is a diagram illustrating the contents (scene description) of the SMIL data supplied to the conventional data reception apparatus.

Figure 13 is a block diagram for explaining the conventional data reception apparatus.

Figure 14 is a diagram for explaining the flow of procedure to obtain media data from a server by the conventional data reception apparatus.

## DETAILED DESCRIPTION OF THE PREFERRED EMBODIMENTS

[Embodiment 1]

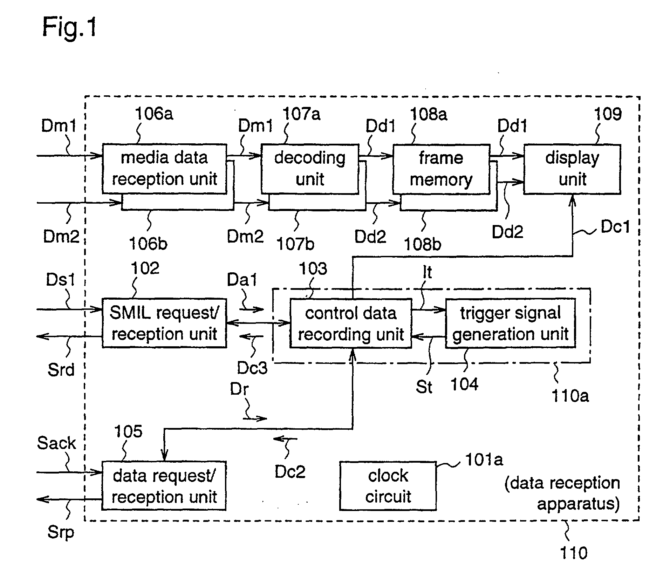

Figure 1 is a block diagram for explaining a data reception apparatus 110 according to a first embodiment of the present invention.

The data reception apparatus 110 receives SMIL data Ds1 as scene description data, reproduces a composite image comprising one background image and two foreground images on the basis of the contents of the SMIL data, and displays the composite image.

To be specific, the data reception apparatus 110 includes an SMIL request/reception unit 102, and a control data generation unit 110a. The SMIL request/reception unit 102 outputs an SMIL request signal Srd for requesting a predetermined server to transmit SMIL data Ds1 on the basis of third control data Dc3, receives the SMIL data Ds1 supplied from the server, and analyzes the SMIL data Ds1. The control data generation unit 110a generates first and second control data Dc1 and Dc2 on the basis of analysis data Da1 obtained by the analysis on the SMIL data in the SMIL request/reception unit 102.

The data reception apparatus 110 further includes a media data reception unit 106a for receiving image data (media data) Dm1 corresponding to a first foreground image from the server; a decoding unit 107a for decoding the received image data Dm1 to output decoded image data Dd1; and a frame memory 108a for storing the decoded image data Dd1 in units of frames. Further, the data reception apparatus 110 includes a media data reception unit 106b for receiving image data (media data) Dm2 corresponding to a second foreground image from the server; a decoding unit 107b for decoding the received image data Dm2 to output decoded image data Dd2; and a frame memory 108b for storing the decoded image data Dd2 in units of frames.

Furthermore, the data reception apparatus 110 includes a display unit 109 for reading the decoded image data Dd1 and Dd2 respectively stored in the frame memories 108a and 108b, on the basis of the first control data Dc1 supplied from the control data generation unit 110a, combining these data with a background image to generate a composite image, and displaying the composite image. The data reception apparatus 110 further includes a data request/reception unit 105 for outputting a data Tequest signal Srp for requesting data from a predetermined server on the basis of the second control data Dc2 supplied from the control data generation unit 210a, and receiving an acknowledge signal Sack to the data request from the server.

The control data generation unit 110a comprises a control data recording unit 103, and a trigger signal generation unit 104. The control data recording unit 103 creates a time table in which plural items, each comprising a control command to be output as control data to the data request/reception unit 105 and the display unit 109 and information relating to the command, are arranged in order of time to execute the command, on the basis of the analysis data Da from the SMIL request/reception unit 102, and outputs time information It relating to the execution time of each control command in order of time. On receipt of the time information It, the trigger signal generation unit 104 sets the execution time of the control command corresponding to each item to start clocking operation, and outputs a trigger signal St to the control data recording unit 103 every time the clock time reaches the set control command execution time. Every time the control data recording unit 103 receives the trigger signal St from the trigger signal generation unit 104, the unit 103 outputs the corresponding control command to the data request/reception unit 105 or the display unit 109 as the control data Dc1 or Dc2.

In figure 1, reference numeral 101a denotes a clock circuit for supplying a reference clock to each component of the data reception apparatus 110, and this is identical to the clock circuit of the conventional data reception apparatus 901.

The trigger signal generation unit 104 may be implemented by a timer which is able to set plural times, performs clocking operation on the basis of the reference clock from the clock circuit 101a, and outputs a trigger signal every time the clock time reaches the set time.

In this first embodiment, the data reception apparatus 110 includes two data reception unit, two decoding unit, and two frame memories, obtains media data corresponding to two foreground images from the server on the network, and combines the two foreground images on one background image to display a composite image. However, the number of media data obtained from the server on the network is not restricted to two. For example, in the case where the data reception apparatus 110 obtains three or more media data from the server on the network, the apparatus 110 is provided with data reception unit, decoding unit, and frame memories as many as the number of the media data to be obtained.

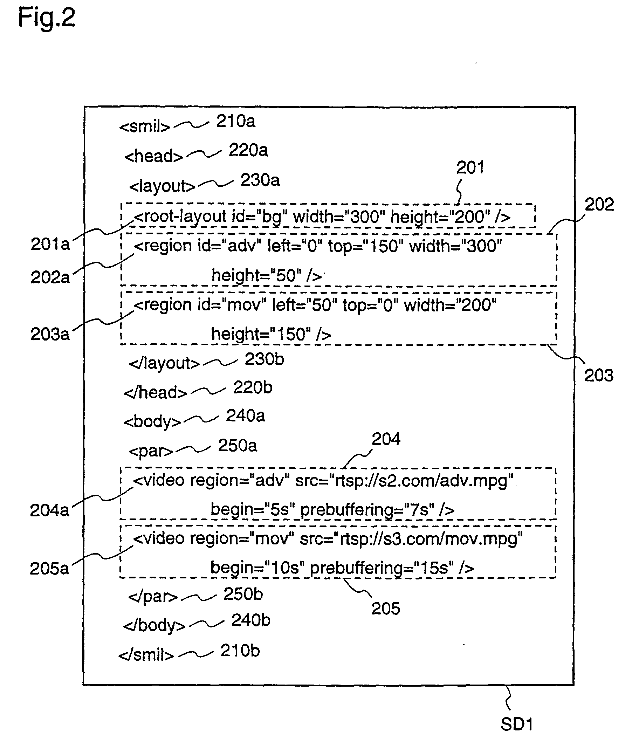

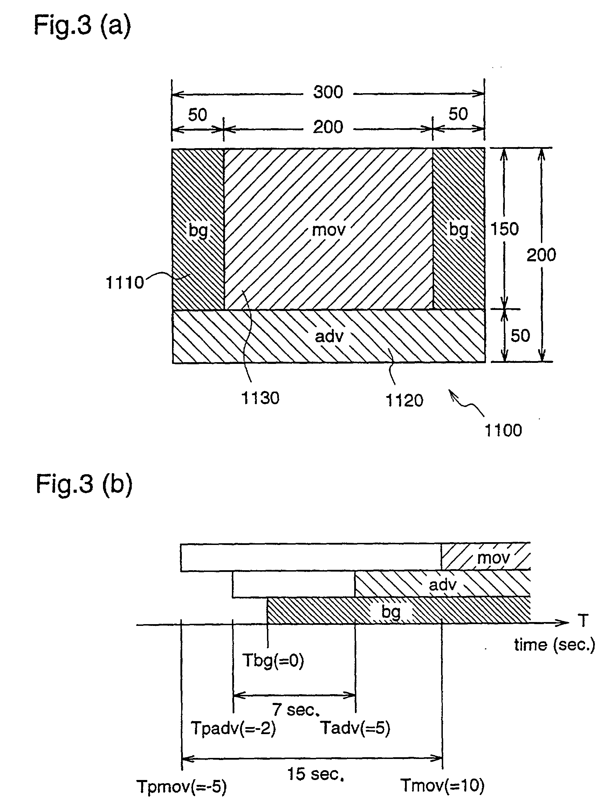

Figure 2 is a diagram illustrating an example of contents of the above-mentioned SMIL data, and the data reception apparatus 110 of this first embodiment receives the SMIL data shown in figure 2. Figures 3(a) and 3(b) illustrate the spatial arrangement and the temporal arrangement of media data as the contents of the SMIL data shown in figure 2, respectively.

In figure 2, character strings <smil>, </smil>, <head>, </head>, <layout>, </layout>, <root-layout>, <region>, <body>, <par>, </par>, <video> which are described at the heads of the respective rows of scene description SD1 are called "elements", and declare the contents of description following the respective elements. That is, elements 210a, 210b, 220a, 220b, 230a, 230b, 240a, 240b, 250a, 250b shown in figure 2 are identical to the elements 710a, 710b, 720a, 720b, 730a, 730b, 740a, 740b, 750a, 750b shown in figure 12, respectively. Further, rows 201~203 shown in figure 2 are identical to the rows 701 703 shown in figure 12, respectively. However, rows 204 and 205 shown in figure 2 are different from the rows 704 and 705 shown in figure 12, respectively.

First of all, the spatial arrangement of media data designated by the SMIL data will be described with reference to figure 2.

The root-layout element 201a designates the size of the entire scene. That is, the root-layout element 201a indicates the size of the rectangle region where the entire scene is displayed, that is, it indicates that the width and the height of the rectangle region are 300 points and 200 points, respectively, by the width attribute (width="300") and the height attribute (height="200") attached to this element. Further, the id attribute relating to this element 201 shows the background image (bg) (id="bg").

The region element 202a indicates the size of the rectangle region where an image corresponding to this element 202 is displayed, that is, it indicates that the width and the height of the rectangle region are 300 points and 50 points, respectively, by the width attribute (width="300") and the height attribute (height="50") attached to the region element 202a. Further, the region element 202a indicates, by the left attribute (left="0") and the top attribute (top="150") attached to the region element 202a, that the upper left edge of the rectangle region is positioned at a distance of 0 point from the left edge of the image space 1100 and 150 points from the upper edge of the image space 1100. Further, the id attribute attached to this element 202a indicates the first foreground image (adv) (id="adv").

The region attribute attached to the video element 204a indicates the first foreground image (adv) (region="adv").

Accordingly, the rectangle region whose size and position are designated by the region element 202a is a region where the first foreground image (adv) is placed (hereinafter also referred to as an adv region).

The region element 203a indicates, by the width attribute (width="200") and the height attribute (height="150") attached to this element, that the width and the height of the corresponding rectangle region are 200 points and 150 points, respectively. Further, the region element 203a indicates, by the left attribute (left="50") and the top attribute (top="0") attached to this element, that the upper left edge of this rectangle region is positioned at a distance of 50 points from the left edge of the image space 1100 and 0 point from the upper edge of the image space 1100. The id attribute attached to this element 203a indicates the second foreground image (mov) (id="mov").

The region attribute attached to the video element 205a indicates the second foreground image (mov) (region="mov").

Accordingly, the rectangle region whose size and position are designated by the region element 203a is a region where the second foreground image (mov) is placed (hereinafter also referred to as a mov region).

The bg region is a region as a background, the adv region is a region where an advertisement or the like is displayed, and the mov region is a region where a moving image or the like is displayed.

Consequently, as shown in figure 3(a), the positions of the adv region 1120, mov region 1130, and bg region 1110 based on the scene description SD1 are identical to the positions of these regions shown in figure 11(a).

More specifically, the predetermined image space 1100 is the background display region (bg region) 1110 where the background image (bg) is displayed. The first foreground display region (adv region) 1120 where the first foreground image (adv) such as an advertisement is placed and the second foreground region (mov region) 1130 where the second foreground image (mov) as a moving picture are placed in the background display region 1110. The sizes of the regions where the respective images are placed and their positions in the image space are identical to those shown in figure 11(a).

Next, a description will be given of the temporal arrangement of the media data designated by the SMIL data shown in figure 2.

The begin attribute (begin="5s") relating to the video element 204a indicates that display of the image data corresponding to this element 204a should be started five seconds after scene display is started.

The scr attribute (scr="rtsp://s2.com/adv.mpg") relating to the video element 204a indicates that the image data corresponding to this video element 204a should be obtained by issuing a command requesting the server (s2.com) to transmit the image data (adv.mpg) stored in this server, by using RTSP.

On the other hand, the begin attribute (begin="10s") relating to the video element 205a indicates that display of the image data corresponding to this element 205a should be started ten seconds after scene display is started.

The scr attribute (scr="rtsp://s3.com/mov.mpg") relating to the video element 205a indicates that the image data corresponding to this video element 205a should be obtained by issuing a command requesting the server (s3.com) to transmit the image data (mov.mpg) stored in this server, by using RTSP.

Consequently, as shown in figure 3(b), display of the first foreground image (adv) is started when five seconds have passed from the start of scene (background image) display, and display of the second foreground image (mov) is started when ten seconds have passed from the start of scene display.

Further, each of the video elements 204a and 205a has a prebuffering attribute. The prebuffering attribute indicates the latency time from reception of the media data to decoding on it. For example, the prebuffering attribute (prebuffering="7s") relating to the video element 204a indicates that the image data (adv.mpg) corresponding to the video element 204a should wait seven seconds for decoding after it is received by the data reception apparatus. The prebuffering attribute (prebuffering="15s") relating to the video element 205a indicates that the image data (mov.mpg) corresponding to the video element 205a should wait fifteen seconds for decoding after it is received by the data reception apparatus.

In the data reception apparatus 110 according to this first embodiment, when the scene description data SD1 is received, a time table considering the latency times for the respective video elements is created and stored in the control data generation unit 110a.

On this time table, the times to issue control commands are set so that receptions of the image data (adv.mpg) and (mov.mpg) corresponding to the video element 204a and 205a are started two seconds and five seconds before start of scene display, respectively, and displays of the image data (adv.mpg) and (mov.mpg) are started at times Tadv (Tadv=5sec.) and Tmov (Tmov=10sec.) after the latency times of seven seconds and fifteen seconds have passed from start of receptions of the video elements 204a and 205a, respectively.

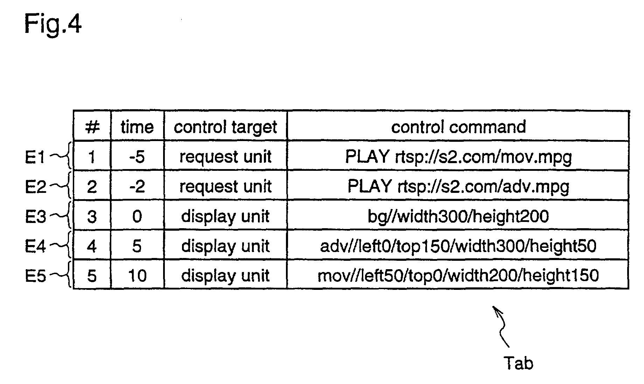

Figure 4 shows the contents of a time table to be stored in the control data generation unit 110a as the contents of the SMIL data.

The time table Tab has an item indicating the time to perform data request or data display, an item indicating the data request/reception unit 105 or the display unit 109 as a control target to which a control command is issued, and an item indicating the control command to the control target. A plurality of events, each having the items of time, control target, and control command, are listed in chronological order. With respect to the event whose control target is the data request/reception unit 105, information designated by the src attribute relating to the video element of the SMIL data is described in the item of the control command. Further, with respect to the event whose control target is the display unit, information designated by the id, width, height, left, and top attributes relating to the root-layout element or the region element of the SMIL data is described in the item of the control command.

Hereinafter, the operation of the data reception apparatus 110 will be described.

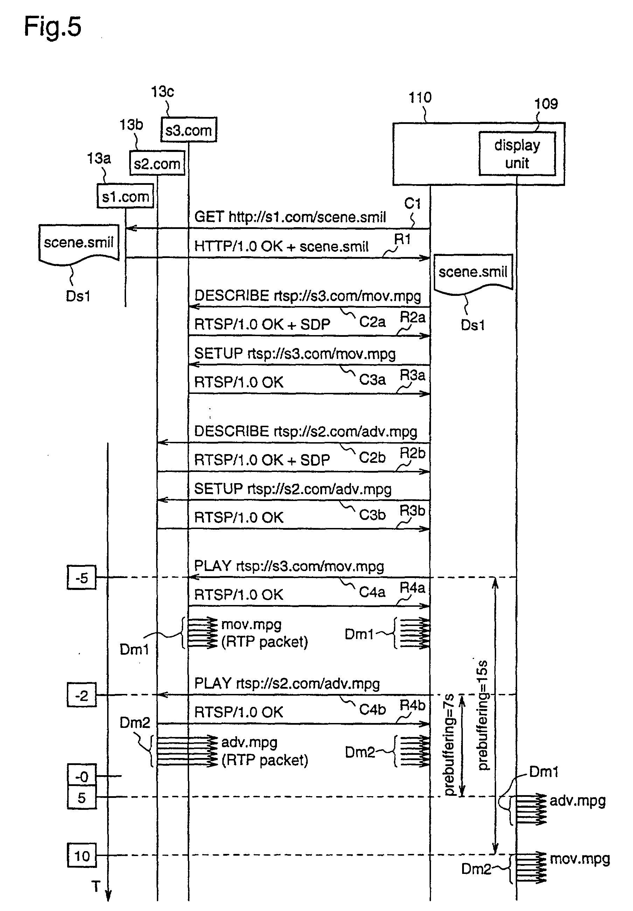

Figure 5 is a diagram for explaining the flow of a procedure by which the data reception apparatus 110 obtains media data from the server. More specifically, figure 5 illustrates exchange of messages between the data reception apparatus and the server, and transmission of media data from the server to the data reception apparatus.

It is assumed that the data reception apparatus 110 is mounted on a personal computer as a client terminal, and the data reception apparatus 110 is supplied with SMIL data Ds1 as data indicating the scene description data SD1 shown in figure 2.

When the user, who is viewing a home page described by HTML (Hyper Text Markup Language) using a Web browser installed on the personal computer, clicks a region on the home page linked to a predetermined scene description SD1 (user operation), the data reception apparatus 110 of the client terminal issues an SMIL request command (GET http://sl.com/scene.smil) C1 requesting SMIL data Ds1 indicating the scene description SD1. This command C1 requests the server (sl.com) 13a to distribute the SMIL data by HTTP.

On receipt of the SMIL request command C1, the server 13a issues an acknowledge (HTTP/1.0 OK) R1 indicating that the command C1 has been accepted, to the client terminal, and transmits the SMIL data (scene.smil) Ds1 to the client terminal.

In the data reception apparatus 110 of the client terminal, the SMIL request/reception unit 102 receives the SMIL data Ds1, and analyzes the SMIL data Ds1.

The SMIL analysis data Da1 obtained by the analysis on the SMIL data is transmitted to the control data generation unit 110a to be stored in the control data recording unit 103. Then, the control data recording unit 103 creates the time table Tab shown in figure 4 on the basis of the SMIL analysis data Da1, whereby the contents of the SMIL data are stored in the form of a time table.

Hereinafter, the process of creating the time table by the control data recording unit 103 will be described briefly.

Initially, in the control data recording unit 103, the time to issue a control command for requesting media data corresponding to each video element is obtained by using the display start time indicated by the begin attribute of each video element, and the latency time (prebuffering time) indicated by the prebuffering attribute of each video element. The time to issue a control command requesting media data is obtained by subtracting the latency time from the display start time. To be specific, the time Tpadv to issue a control command requesting the media data (adv.mpg) corresponding to the video element 204a is -2 sec. with reference to the scene display start time Tbg (Tbg=0sec.), and the time Tpmov to issue a control command requesting the media data (mov.mpg) corresponding to the video element 205a is -5 sec.

Thereafter, in the control data recording unit 103, on the basis of the SMIL analysis data Da1, the contents of the SMIL data are sorted into two groups, i. e., information required to request the media data (information designated by the src attribute included in the video element), and information required to display the media data (information designated by the id, width, height, left, and top attributes included in the root-layout element or the region element).

Next, in the control data recording unit 103, event data E1 is created on the basis of the information to display the media data, which event data comprises information indicating a control command to request the media data (mov.mpg), information indicating the data request unit as a target of the control command, and information indicating the time to issue the control command. Further, event data E2 is created, which comprises information indicating a control command to request the media data (adv.mpg), information indicating the data request unit as a target of the control command, and information indicating the time to issue the control command.

Furthermore, on the basis of the information to request the media data, the following event data are created: event data E3 comprising information indicating a control command to display the background image (bg), information indicating the display unit as a target of the control command, and information indicating the time to issue the control command; event data E4 comprising information indicating a control command to display the first foreground image (adv), information indicating the display unit as a target of the control command, and information indicating the time to issue the control command; and event data E5 comprising information indicating a control command to display the second foreground image (mov), information indicating the display unit as a target of the control command, and information indicating the time to issue the control command.

Thereafter, in the control data recording unit 103, the respective event data are arranged according to the corresponding control command issue times (chronological order) to create the time table shown in figure 4, and the time table so created is stored.

To be specific, in the scene description SD1 shown in figure 2, the times to request the media data (adv.mpg) and (mov.mpg) corresponding to the video elements 204 and 205 (the times to issue control commands) are set at -5 sec. and -2 sec., respectively. The display start times of the foreground images (adv) and (mov) are set at 5 sec. and 10 sec., respectively, and the display start time of the scene (background image) is 0 sec. Accordingly, as shown in figure 4, on the time table stored in the control data recording unit 103, the first event data is the event data E1, the second event data is the event data E2, the third event data is the event data E3, the fourth event data is the event data E4, and the fifth event data is the event data E5.

Thereafter, the control data recording unit 103 outputs the information indicating the issue times of the respective control commands (time information), from the time table to the signal generation unit 104 in descending order.

When the time information is input to the signal generation unit 104, the time indicating the time information is recorded as a set time in order of reception, and the clock starts clocking operation.

At this time, in the data reception apparatus 110, simultaneously with the creation of the time table, the data reception apparatus and a predetermined server exchange messages so as to set up transmission of image data at the server.

To be specific, as shown in figure 5, the data reception apparatus 110 of the client terminal issues a command (DESCRIBE rtsp://s3.com/mov.mpg) C2a requesting specific information relating to the media data corresponding to the second foreground image (mov) (e.g., coding condition, existence of plural candidate data, etc.), to the third server (s3.com) 13c.

On receipt of the command C2a, the third server 13c issues an acknowledge (RTSP/1.0 OK) R2a indicating that the command has been accepted, to the client terminal, and transmits SDP (Session Description Protocol) information to the client terminal.

Next, the data reception apparatus 110 of the client terminal issues a setup request command (SETUP rtsp://s3.com/ adv.mpg) C3a which requests the third server (s3.com) 13c to set up provision of the media data corresponding to the second foreground image (mov), to the third server 13c. Upon completion of setup for the media data, the third server 13c issues an acknowledge (RTSP/1.0 OK) R3 indicating that the command C3a has been accepted, to the client terminal.

Thereafter, the data reception apparatus 110 of the client terminal issues a command (DESCRIBE rtsp://s2.com/adv.mpg) C2b requesting specific information relating to the media data corresponding to the first foreground image (adv) (e.g., coding condition, existence of plural candidate data, etc.), to the second server (s2.com) 13b.

On receipt of the command C2b, the second server 13b issues an acknowledge (RTSP/1.0 OK) R2b indicating that the command C2b has been accepted, to the client terminal, and transmits SDP (Session Description Protocol) information to the client terminal.

Next, the data reception apparatus 110 of the client terminal issues a setup request command (SETUP rtsp://s3.com/ adv.mpg) C3b which requests the second server (s2.com) 13b to set up provision of the media data corresponding to the first foreground image (adv), to the second server 13b. Upon completion of setup for the media data, the second server 13b issues an acknowledge (RTSP/1.0 OK) R3b indicating that the command C3b has been accepted, to the client terminal.

When the time of the clock reaches the set time stored in the signal generation unit 104, the signal generation unit 104 generates a trigger signal St, and outputs it to the control data memory 103. Since the set times stored in the signal generation unit 104 are -5, -2, 0, 5, and 10 sec., the signal generation unit 104 outputs a trigger signal every time the clock time reaches -5, -2, 0, 5, and 10 sec. Upon reception of every trigger signal, the control data recording unit 103 issues a control command included in the event on the time table, to the corresponding control target.

First of all, when a trigger signal outputted from the signal generation unit 104 at time t (=-5sec.) is input to the control data recording unit 103, the control data recording unit 103 outputs a control command (PLAY rtsp://s3.com/mov.mpg) C4a of the first event on the time table, to the data request/reception unit 105 as a target of this control command.

The data request/reception unit 105 outputs a message by RTSP for requesting the image data (mov.mpg), to the third server (//s3.com) 13c, on the basis of the control command (PLAY rtsp://s3.com/mov.mpg) C4a from the control data recording unit 103.

On receipt of the message from the data request/reception unit 105, the third server 13c transmits the image data (mov.mpg) by RTP to the data reception apparatus 110.

The image data (mov.mpg) Dm2 transmitted from the server 13c is received by the media data reception unit 106b. The image data Dm2 is a bit stream which is compressively coded by a coding method based on MPEG standard or the like. The bit stream (image data) inputted to the media data reception unit 106b is output to the decoding unit 107b frame by frame. In the decoding unit 107b, the bit stream is decoded frame by frame. The decoded image data Dd2 obtained in the decoding unit 107b is stored in the frame memory 108b frame by frame.

When a trigger signal outputted from the signal generation unit 104 at time t (=-2sec.) is input to the control data recording unit 103, the control data recording unit 103 outputs a control command (PLAY rtsp://s2.com/adv.mpg) C4b of the second event on the time table, to the data request/reception unit 105 as a target of this control command.

The data request/reception unit 105 outputs a message by RTSP for requesting the image data (adv.mpg) Dm1, to the second server (s2.com) 13b, on the basis of the control command (PLAY rtsp://s2.com/adv.mpg) C4b from the control data recording unit 103.

On receipt of the message from the data request/reception unit 105, the second server 13b transmits the image data (adv.mpg) Dm1 by RTP to the data reception apparatus 110.

The image data (adv.mpg) Dm1 transmitted from the server 13b is received by the media data reception unit 106a. The image data Dm1 is a bit stream which is compressively coded by a coding method based on MPEG standard or the like. The bit stream (image data) inputted to the media data reception unit 106a is output to the decoding unit 107a frame by frame. In the decoding unit 107a, the bit stream is decoded frame by frame. The decoded image data Dd1 obtained in the decoding unit 107a is stored in the frame memory 108a frame by frame.

When a trigger signal outputted from the signal generation unit 104 at time t (=0sec.) is input to the control data recording unit 103, the control data recording unit 103 outputs a control command (bg// width300/height200) of the third event on the time table, as control data Dc1, to the display unit 109 as a target of this control command. The display unit 109 displays the background image (bg) over the image space, according to the control command (bg// width300/height200) from the control data recording unit 103. The data of the background image is retained by the data reception apparatus 110 in advance. At this point of time (t=0sec.), the display start times of the first and second foreground images indicated by the begin attributes of the video elements 204a and 205a, respectively, are larger than 0 sec. and, thereafter, the first foreground image (adv) and the second foreground image (mov) are not displayed in the adv region (first foreground display region) 1120 and the mov region (second foreground display region) 1130, respectively.

When a trigger signal outputted from the signal generation unit 104 at time t (=5sec.) is input to the control data recording unit 103, the control data recording unit 103 outputs a control command (adv// left0/top150/width300/height50) of the fourth event on the time table, as control data Dc1, to the display unit 109 as a target of this control command. In the display unit 109, the decoded image data Dd2 is read frame by frame, from the frame memory 108a, on the basis of the control command (adv//left0/top150/width300/height50) from the control data recording unit 103, and the first foreground image (adv) is combined with the background image such that it is placed on the adv region (first foreground display region) 1120 in the image space 1100.

Further, when a trigger signal St outputted from the signal generation unit 104 at time t (=10sec.) is input to the control data recording unit 103, the control data recording unit 103 outputs a control command (mov// left50/top0/width200/height150) of the fifth event on the time table, as control data Dc1, to the display unit 109 as a target of this control command. In the display unit 109, the decoded image data Dd2 is read frame by frame, from the frame memory 108a, on the basis of the control command (mov//left50/top0/width200/height150) from the control data recording unit 103, and the second foreground image (mov) is combined with the background image and the first foreground image such that it is placed on the mov region (second foreground display region) 1130 in the image space 1100.

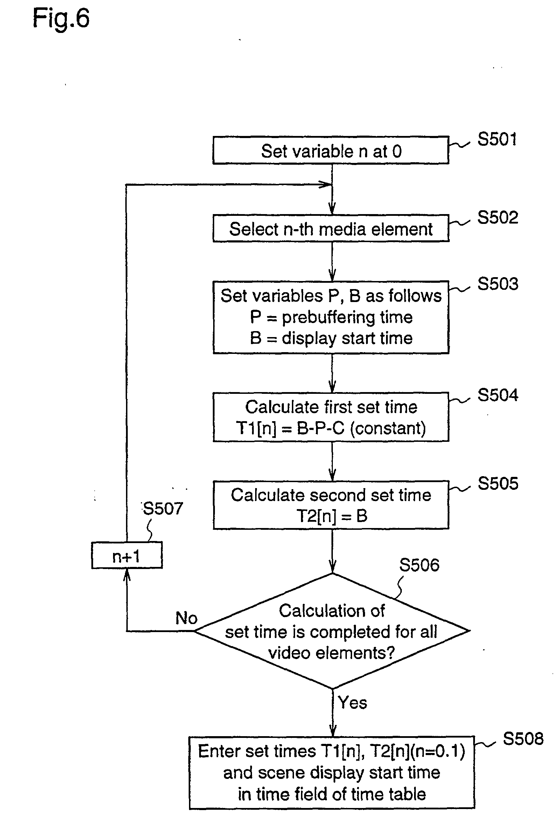

Figure 6 is a flowchart illustrating a specific process of calculating the time to issue a control command requesting media data in the control data recording unit 103. Hereinafter, the calculation process will be described briefly. In the flowchart shown in figure 6, the first set time T1[n] is the time to issue a control command requesting media data corresponding to the n-th video element in the scene description SD1 (hereinafter referred to simply as media data request time), and the second set time T2[n] is the time to display media data corresponding to the n-th video element.

Furthermore, figure 6 illustrates a process of calculating the media data request time T1[n] by introducing, in addition to the prebuffering time, the time C required from when the control command requesting the media data is issued to the server to when the client receives the media data.

First of all, in the control data recording unit 103, the first internal variable n used for time calculation is set at zero (step S501). The variable n increases by 1 every time the time calculation on a video element in the scene description SD1 is completed.

Next, a video element to be subjected to the time calculation process (target video element) is decided on the basis of the analysis data Dd1 from the SMIL request/reception unit 102 (step S502). Usually, a target video element is successively selected from the head of plural video elements which are arranged in predetermined order in the scene description SD1. Therefore, the video element 204a is selected first, between the video elements 204a and 205a.

Subsequently, in the control data recording unit 103, the value "7" of the prebuffering attribute of the video element 204a is set as the second internal variable P used for the time calculation process, and the value "5" of the begin attribute of the video element 204a is set as the third internal variable B used for the time calculation process (step S503).

Thereafter, in the control data recording unit 103, the first set time T1[n] is calculated on the basis of the following formula (1) (step S504).

$$T1[n]=B-P-C \qquad (1)$$

wherein C is a constant indicating the time required from when the data request/reception unit 105 issues a control command requesting media data to when the data reception unit receives the media data, and the value of the constant C is set by predicting the time from the request control command issue time to the data reception time. In this first embodiment, the constant C is set at 0 sec.

Accordingly, when 5, 7, 0 (sec.) based on the scene display start time (0sec.) are assigned to the variables B, P, C in formula (1), respectively, the first set time T1[0] corresponding to the first video element 204a becomes -2, and the time to issue the control command requesting the media data of the first foreground image (adv) is two seconds before the scene display start time (0sec.).

Further, in the control data recording unit 103, the second set time T2[n] is calculated on the basis of the following formula (2) (step S505).

$$T2[n]=B \qquad (2)$$

As the result, the second set time T2[0] corresponding to the first video element 204a becomes 5, and the time to display the first foreground image (adv) is five seconds before the scene display start time (0sec.).

Thereafter, in the control data recording unit 103, it is decided whether or not the first and second set times have been calculated for all of the video elements shown in the scene description SD1 (step S506). When the first and second set times have already been calculated for all of the video elements, the first and second set times T1[n] and T2[n] (n=0,1) of the respective video elements and the scene display start time Tab are entered in the time field of the time table (step S508).

On the other hand, when the first and second set times have not yet been calculated, the value of the variable n is incremented by 1 (step S507), and the processes in steps S502 to S506 are repeated.

In the data reception apparatus 110, when calculation of the first and second set times for the video element 204a has been completed, calculation of the set times for the video element 205a is not completed yet. Therefore, the value of the variable n is incremented by 1 (step S507), and the processes in steps S502 to S506 are performed on the video element 205.

When calculating the first and second set times for the video element 205a, 10, 15, and 0 (sec.) based on the scene display start time (0sec.) are assigned to the variables B, P, and C in formula (1), respectively. As the result, the first set time T1[1] of the second video element 205a becomes -5, and the time to issue the control command requesting the media data of the second foreground image (mov) is five seconds before the scene display start time (0sec.). Further, the second set time T2[1] of the second video element 205a becomes 10, and the time to display the second foreground image (mov) is ten seconds before the scene display start time (0sec.).

At this point of time, calculation of the first and second set times for all of the video elements has been completed. Therefore, the first and second set times T1[0] and T2[0] of the video element 204a, the first and second set times T1[1] and T2[1] of the video element 205a, and the scene display start time Tab are entered in the time field of the time table (step S508).

That is, in the time field of the time table, -5, -2, 0, 5, and 10 sec. are entered in this order as time information of control commands.

As described above, the data reception apparatus 110 of the first embodiment is provided with the SMIL request/reception unit 102 which requests the server 13a to transmit the SMIL data Ds1 as data *indicating* the scene description SD1 for combining the first and second foreground images (adv) and (mov) with the background image (bg) to display the composite image, and receives the SMIL data Ds1 from the server 13a; the data request/reception unit 105 which requests the servers 13b and 13c to transmit the media data Dm1 and Dm2 of the respective foreground images, and receives the messages from the servers; and the control data generation unit 110a which controls the data request/reception unit 105 so that the media data request messages are issued to the corresponding servers at times the latency times earlier than the display start times of the respective foreground images, on the basis of the information indicating the latency times before starting display of the respective foreground images included in the SMIL data Ds1. Therefore, each foreground image can be combined with the background image to display a composite image, at the time designated by the scene description.

Further, by setting the latency time at a sufficiently large value considering the condition of the network through which the media data is transmitted (e.g., band width, congestion, etc.), playback of the media data by the data reception apparatus is hardly affected by jitter in the network, thereby preventing the image display from being interrupted during playback of the media data.

Furthermore, in the data reception apparatus 110 of this first embodiment, the control data recording unit 103 manages the time to request media data of each foreground image from the server and the time to display each foreground image, with reference to the time table containing information about these times, on the basis of the SMIL data. Further, the control data recording unit 103 issues a control command to instruct the data request unit to make a request for media data or a control command to instruct the display unit to start display of media data, every time the clock time in the reception apparatus reaches the time described on the time table. Therefore, even when the number of foreground images constituting the composite image is increased, comparison of the clock time with the time information described on the time table permits the data request unit to make a request for each media data at an appropriate time before starting display of each foreground image, whereby the foreground image is display satisfactorily.

In this first embodiment, the control data recording unit 103 calculates the time to issue a control command, with the delay time C being set at 0, which delay time is required from when the unit 103 issues a control command requesting media data to the server to when the media data is received. However, this delay time C may be set at an arbitrary number larger than 0 according to the type of the network (e.g., a network including a radio communication line, or a network comprising only a wired communication line).

While in this first embodiment the data reception apparatus receives video data as media data, the media data is not restricted to video data, and it may be text data, audio data, or the like. Also in this case, the same effects as mentioned above are achieved.

While in this first embodiment the video data supplied to the data reception apparatus have been compressively coded by MPEG, the video data may have been compressively coded by other coding methods, such as JPEG (Joint Photographic Coding Experts Group), GIF (Graphics Interchange Format), H.261, H. 263, and the like.

While in this first embodiment the scene description data designates RTSP as a transmission protocol for making a data request, the scene description data may designate other protocols such as HTTP (Hyper Text Transfer Protocol) and the like.

Furthermore, in this first embodiment, the control data recording unit 103 calculates the time to issue a control command to the data request unit or the display unit, and the signal generation unit 104 sets the control command issue time calculated by the unit 103 as a trigger generation time, and outputs a trigger signal to the control data recording unit 103 every time the clock time in the signal generation unit 104 reaches the set trigger generation time. However, the time to issue a control command to the data request/reception unit or the display unit may be calculated by the signal generation unit 104. In this case, the control data recording unit 103 must manage the respective control commands according to their issue times.

While in this first embodiment the data reception apparatus calculates the time to request media data from the server by using the prebuffering attribute value which is attached to the video element and indicates the latency time, the data reception apparatus may calculate the media data request time by using a request attribute value which indicates the time to output a data request message to the server.

[Embodiment 2]

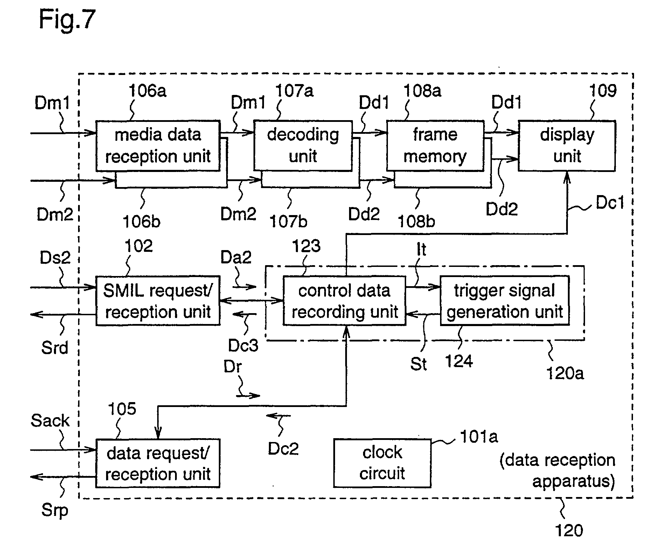

Figure 7 is a block diagram for explaining a data reception apparatus 120 according to a second embodiment of the present invention.

The data reception apparatus 120 of this second embodiment employs, as scene description data, SMIL data Ds2 which is different from the SMIL data Ds1 used for the first embodiment, and the apparatus 120 is provided with a control data recording unit 120a for generating control data Dc1 and Dc2 on the basis of the SMIL data Ds2, instead of the control data generation unit 110a of the first embodiment for generating control data Dc1 and Dc2 on the basis of the SMIL data Ds1.

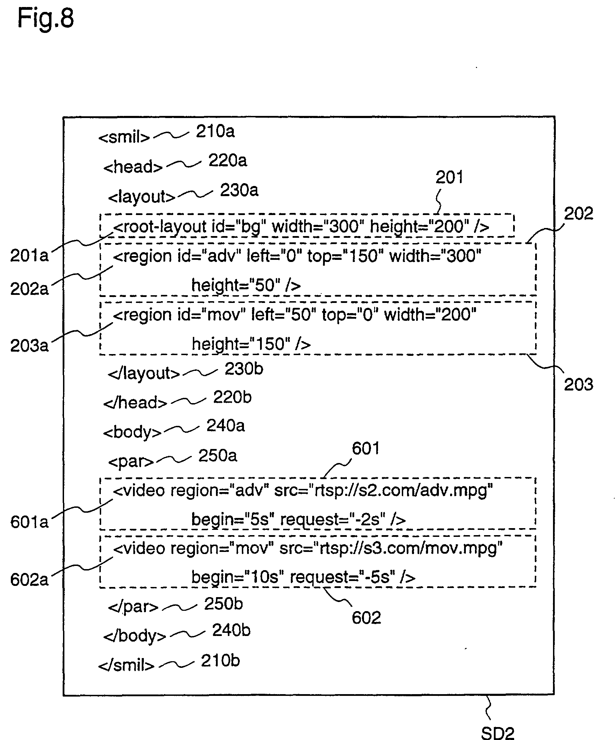

Figure 8 is a diagram illustrating the contents of the SMIL data Ds2 (scene description DS2) supplied as scene description data to the data reception apparatus 120.

The SMIL data Ds2 includes a request attribute value indicating the time to output a data request message to the server, instead of the prebuffering attribute in the SMIL data Ds1. That is, in the SMIL data Ds2, a video element 601a has a region attribute (region="-2s") indicating that a request message for image data (adv. mpg) is output two seconds before starting scene display, instead of the prebuffering attribute (prebuffering="7s") possessed by the video element 201a of the SMIL data Ds1. Further, in the SMIL data Ds2, a video element 602a has a region attribute (region="-5s") indicating that a request message for image data (mov. mpg) is output five seconds before starting scene display, instead of the prebuffering attribute (prebuffering="15s") possessed by the video element 202a of the SMIL data Ds1.

In figure 8, a row 601 including the video element 601a corresponds to the row 210 including the video element 201a in the scene description SD1 of the first embodiment, and a row 602 including the video element 602a corresponds to the row 202 including the video element 202a in the scene description SD1 of the first embodiment.

In the data reception apparatus 120 of this second embodiment, a control data generation unit 120a comprises a control data recording unit 123, and a trigger signal generation unit 124. The control data recording unit 123 creates a time table Tab shown in figure 4, outputs the control data Dc1 and Dc2, and outputs time information It, on the basis of SMIL analysis data Da2 obtained by analyzing the SMIL data Ds2. The trigger signal generation unit 124 is identical in construction to the trigger signal generation unit 104 included in the data reception apparatus 110 of the first embodiment.

Also in the data reception apparatus 120, like in the data reception apparatus 110 of the first embodiment, a request message for each media data is issued to a specific server at a time a predetermined period earlier than the display start time of each foreground image, on the basis of the SMIL data Ds2 supplied from the server, whereby the foreground image can be combined with the background image for display at the time designated by the scene description.

In this second embodiment, a media data request message is issued at the timing when the clock time in the data reception apparatus reaches the time designated by the request attribute in the SMIL data Ds2. However, as described for the first embodiment, the media data request message may be issued considering the constant C which is the time required from when the media data request message is transmitted to the server to when the media data is received, that is, the request message may be issued at a time by the constant C earlier than the time designated by the request attribute.

Further, while in the first and second embodiments the attribute indicating the latency time before starting display of each foreground image is called "prebuffering attribute" and the attribute indicating the time to issue a media data request message is called "request attribute", these attributes may be called in other names so long as the meanings are the same.

While in the first embodiment the latency time from when image data of an image is requested to the server to when display of the image is started is determined on the basis of the SMIL data, the latency time may be determined on the basis of control data other than the SMIL data. For example, when inputted image data is data (bit stream) which has been encoded by MPEG coding, the latency time may be set on the basis of VBV (Video Buffer Verifier) delay information which is multiplexed in a header of each frame of a video bit stream, such that the latency time is longer than the delay time indicated by this information. In this case, the following effects are achieved.

In a video decoder receiving a bit stream transmitted at a constant transmission rate, since video data varies frame by frame, the latency time from when a bit stream is received to when the bit stream is decoded varies frame by frame. The VBV delay value multiplexed in the header of each frame of the video bit stream shows this delay time. Therefore, by starting decoding on the video bit stream when the time indicated by the VBV delay value has passed after reception of the video data, the buffer of the decoder is prevented from underflow or overflow. However, since the information indicating the VBV delay value is multiplexed in the bit stream itself, it is impossible to know the VBV delay value in advance of reception of the bit stream.

While in the first and second embodiments the data reception unit 106a (106b) outputs one frame of media data to the decoding unit 107a (107b) every time it receives one frame of media data, the construction of the data reception unit is not restricted thereto.

For example, the data reception unit 106a (106b) may have a memory to hold the received media data, and it may read the media data from the memory to output it to the decoding unit 107a (107b) at the time when the clock time in the data reception apparatus reaches the display start time indicated by the begin attribute in the SMIL data. Alternatively, the data reception unit 106a (106b) may have a memory to hold the received media data, and it may read the media data from the memory to output it to the decoding unit 107a (107b) at the time when the clock time in the data reception apparatus reaches a time a predetermined period (e.g., one second) before the display start time indicated by the begin attribute in the SMIL data.

In the above-described construction which starts decoding on the received media data at the display start time indicated by the begin attribute, however, since decoding of the media data is started at the media data display start time, there is the possibility that the decoded image data is not stored in the frame memory by a predetermined time, depending on the performance of the decoding unit.

While in the first and second embodiments the SMIL data is received as control data, the control data is not restricted to the SMIL data. For example, the control data may be any of the following: XHTML (Extensible Hyper Text Markup Language) defined by W3C, HTML (Hyper Text Markup Language) + TIME (Timed Interactive Multimedia Extensions), SDP (Session Description Protocol) defined by IETF (Internet Engineering Task Force), and BIFS (Binary Format for Scene) defined by MPEG standard.

Further, while in the first and second embodiments the data reception apparatus is implemented by hardware, it may be implemented by software.

For example, in the data reception apparatus 110, the SMIL request/reception unit 102, the signal generation unit 104, the data request/reception unit 105, the media data reception units 106a and 106b, the decoding units 107a and 107b, and the display unit 109 can be implemented in a computer system using a software program in which the functions of these units are programmed so as to be performed by a CPU (Central Processing Unit).

Even when the data reception apparatus 110 of the first embodiment is implemented by software, the same effects as described for the first embodiment are achieved.

The above-described software program can be stored in storage media, such as a floppy disk, an optical disk, an IC card, a ROM cassette, and the like.

In the first and second embodiments, a server (data transmission apparatus) corresponding to a receiving terminal (client terminal) having a data reception apparatus which receives media data and control data such as SMIL data, transmits the SMIL data including information indicating the latency time before display of media data (prebuffering attribute) and information indicating the time to request media data from the server (request attribute), to the receiving terminal. However, the data transmission apparatus may transmits control data other than the SMIL data, including the information indicating the latency time and the information indicating the data request time.

For example, a server (data transmission apparatus) corresponding to a receiving terminal which combines plural pieces of media data for display, transmits control data such as response data to the request from the receiving terminal, which control data includes the prebuffering attribute value, the request attribute value, or an attribute value equivalent to them, before transmission of media data, and then transmits media data according to a data request message from the receiving terminal. Also in this case, the receiving terminal can make a request for media data at an appropriate data request time.

Hereinafter, a description will be given of an example of data exchange between a data reception apparatus included in a receiving terminal and a data transmission apparatus which transmits the information indicating the latency time, included in control data other than the SMIL data.

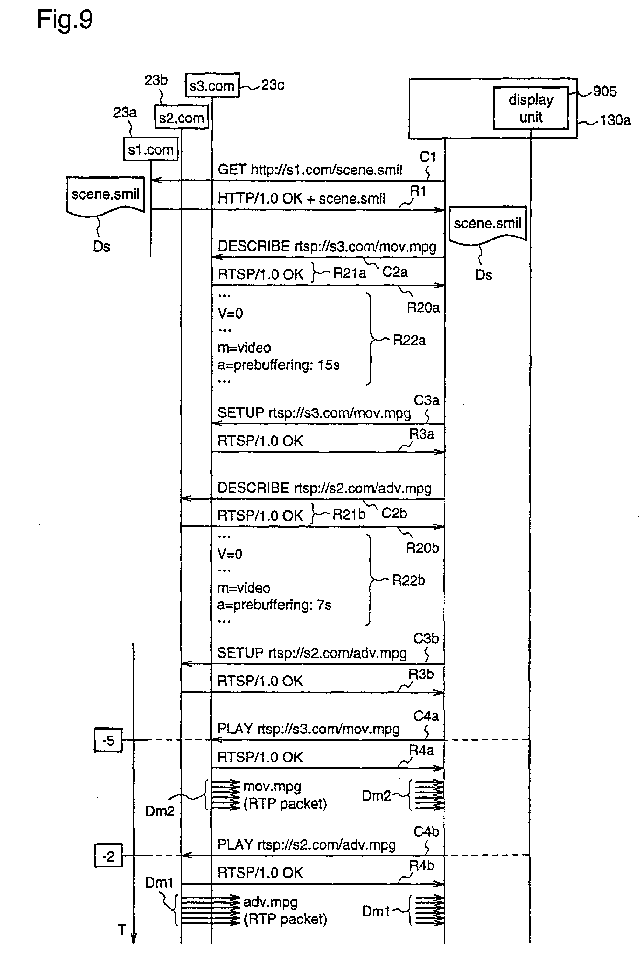

Figure 9 is a diagram illustrating an example of data exchange between a data transmission apparatus (server) for transmitting media data and a data reception apparatus, in the case where the data transmission apparatus transmits the information indicating the prebuffering time (latency time) included in SDP.

In figure 9, each of a second server (data transmission apparatus) 23b transmitting the media data of the first foreground image and a third server (data transmission apparatus) 23c transmitting the media data of the second foreground image, transmits SDP including the prebuffering time (latency time). A first server (data transmission apparatus) 23a is identical in construction to the first server 13a shown in figure 14. A data reception apparatus 130a is mounted on a personal computer as a client terminal, and is supplied with SMIL data Ds indicating the scene description SD shown in figure 12. The construction of the data reception apparatus 130a is identical to the conventional data reception apparatus 901 (refer to figure 13) except the data request/reception unit 908. That is, in the data reception apparatus 130a, the data request/reception obtains the information indicating the prebuffering time (latency time), and supplies it to the control data generation unit 907.

When the user, who is viewing a home page described by HTML (Hyper Text Markup Language) using a Web browser installed on the personal computer, clicks a region on the home page linked to predetermined SMIL data, the data reception apparatus 130a of the client terminal issues an SMIL request command (GET http://sl.com/scene.smil) C1 requesting the SMIL data Ds. This command C1 requests the first server (sl. com) 23a to distribute the SMIL data by HTTP.

On receipt of the SMIL request command C1, the server 23a issues an acknowledge (HTTP/1.0 OK) R1 indicating that the command has been accepted, to the client terminal, and transmits the SMIL data (scene. sml) Ds to the client terminal.

In the data reception apparatus 130a of the client terminal, the SMIL request/reception unit 906 receives the SMIL data Ds, and analyzes the SMIL data Ds.

The SMIL analysis data Da obtained by the analysis on the SMIL data is stored in the control data generation unit 907.

Thereafter, the data reception apparatus 130a issues a command (DESCRIBE rtsp://s3.com/mov. mpg) C2a requesting specific information relating to the media data corresponding to the second foreground image (mov) (e.g., coding condition, existence of plural candidate data, etc.), to the third server (s3.com) 23c.

On receipt of the command C2a, the third server 23c issues an acknowledge R20a indicating that the command has been accepted, to the client terminal. This acknowledge R20a includes an OK message (RTSP/1.0 OK) 21a indicating that the DESCRIBE command C2a has been accepted, and SDP (Session Description Protocol) information R22a. The SDP information R22a includes (a=prebuffering:15s) information, in addition to information required for decoding of media data at the receiving terminal and information required for transmission of media data. In the SDP information R22a, "V=0" indicates version information relating to the construction of the SDP, and "m=video" indicates that information relating to video data is described after the "m=video". The (a=prebuffering:15s) information indicates that the latency time from requesting the media data of the foreground image (mov) to displaying the foreground image is 15 seconds.

Next, the data reception apparatus 130a of the client terminal issues a setup request command (SETUP rtsp://s3.com/ mov.mpg) C3a which requests the third server (s3.com) 23c to set up provision of the media data corresponding to the second foreground image (mov), to the third server 23c. Upon completion of setup for the media data, the third server 23c issues an acknowledge (RTSP/1.0 OK) R3a indicating that the command C3a has been accepted, to the client terminal.

Subsequently, the data reception apparatus 130a issues a command (DESCRIBE rtsp://s2.com/adv. mpg) C2b requesting specific information relating to the media data corresponding to the first foreground image (adv) (e.g., coding condition, existence of plural candidate data, etc.), to the second server (s2.com) 23b.

On receipt of the command C2b, the second server 23b issues an acknowledge R20b indicating that the command has been accepted, to the client terminal. This acknowledge R20b includes an OK message (RTSP/1.0 OK) 21b indicating that the DESCRIBE command C2a has been accepted, and SDP (Session Description Protocol) information R22b. The SDP information R22b includes (a=prebuffering:7s) information as well as (V=0) information and (m=video) information. The (a=prebuffering:7s) information indicates that the latency time from requesting the media data (adv.mpg) of the first foreground image (adv) to displaying the foreground image is 7 seconds.

Next, the data reception apparatus 130a of the client terminal issues a setup request command (SETUP rtsp://s2.com/ adv.mpg) C3b which requests the second server (s2.com) 23b to set up provision of the media data corresponding to the first foreground image (adv), to the second server 23b. Upon completion of setup for the media data, the second server 23b issues an acknowledge (RTSP/1.0 OK) R3b indicating that the command C3b has been accepted, to the client terminal.

Thereafter, the data reception apparatus 130a of the client terminal issues a data request command (PLAY rtsp://s3.com/ mov.mpg) C4a requesting the media data (mov.mpg) corresponding to the second foreground image (mov), to the third server (s3.com) 23c, fifteen seconds before the display start time of the second foreground image (five seconds before the display start time of the entire scene). On receipt of this command C4a, the third server 23c issues an acknowledge (RTSP/1.0 OK) R4a indicating that the command C4a has been accepted, to the client terminal. Thereafter, the third server 23c transmits the media data Dm2 corresponding to the second foreground image (mov.mpg), which media data is stored in RTP packets, to the client terminal.

Further, the data reception apparatus 130a of the client terminal issues a data request command (PLAY rtsp://s2.com/ adv.mpg) C4b requesting the media data (adv.mpg) corresponding to the first foreground image (adv), to the second server (s2.com) 23b, seven seconds before the display start time of the first foreground image (two seconds before the display start time of the entire scene). On receipt of this command C4b, the second server 23b issues an acknowledge (RTSP/1.0 OK) R4b indicating that the command C4b has been accepted, to the client terminal. Thereafter, the second server 23b transmits the media data Dm1 corresponding to the first foreground image (adv.mpg), which media data is stored in RTP packets, to the client terminal.

Thereafter, the respective media data are output to the display unit 905 at the display start times to be displayed on the basis of the result of analysis performed on the SMIL data.

The above-described method of transmitting the information which indicates the latency time (prebuffering time) and is included in the control data (SDP data) other than SMIL data, from the data transmission apparatus to the data reception apparatus, is very effective for contents whose initial delay time (i.e., latency time from requesting media data to the server to starting display of the media data) varies in real time (e.g., video of a concert which is broadcast live).

Figure 10 is a diagram illustrating an example of data exchange between a data transmission apparatus (server) for transmitting media data and a data reception apparatus, in the case where the data transmission apparatus transmits the information indicating the prebuffering time (latency time), which information is included in an acknowledge to a SETUP request of RTSP.

In figure 10, each of a second server (data transmission apparatus) 33b transmitting the media data of the first foreground image and a third server (data transmission apparatus) 33c transmitting the media data of the second foreground image, transmits the information indicating prebuffering time (latency time), included in an acknowledge to a SETUP request of RTSP. A first server (data transmission apparatus) 33a is identical in construction to the first server 13a shown in figure 14. A data reception apparatus 130b is mounted on a personal computer as a client terminal, and is supplied with SMIL data SD shown in figure 12 as scene description data SD. The construction of the data reception apparatus 130b is identical to the conventional data reception apparatus 901 (refer to figure 13) except the data request/reception unit 908. That is, in the data reception apparatus 130b, the data request/reception obtains the information indicating the prebuffering time (latency time), and supplies it to the control data generation unit 907.

When the user, who is viewing a home page described by HTML (Hyper Text Markup Language) using a Web browser installed on the personal computer, clicks a region on the home page linked to predetermined SMIL data, the data reception apparatus 130b of the client terminal issues an SMIL request command (GET http:// sl.com/scene.smil) C1 requesting the SMIL data Ds. This command C1 requests the first server (sl.com) 33a to distribute the SMIL data by HTTP.

On receipt of the SMIL request command C1, the server 33a issues an acknowledge (HTTP/1.0 OK) R1 indicating that the command has been accepted, to the client terminal, and transmits the SMIL data (scene. sml) Ds to the client terminal.

In the data reception apparatus 130b of the client terminal, the SMIL request/reception unit 906 receives the SMIL data Ds, and analyzes the SMIL data Ds.

The SMIL analysis data Da obtained by the analysis on the SMIL data is stored in the control data generation unit 907.

Thereafter, the data reception apparatus 130b issues a command (DESCRIBE rtsp://s3.com/mov. mpg) C2a requesting specific information relating to the media data corresponding to the second foreground image (mov) (e.g., coding condition, existence of plural candidate data, etc.), to the third server (s3.com) 33c.

On receipt of the command C2a, the third server 33c issues an acknowledge R2a indicating that the command has been accepted, to the client terminal, and transmits SDP (Session Description Protocol) information to the client terminal.

Next, the data reception apparatus 130b of the client terminal issues a setup request command (SETUP rtsp://s3.com/ mov.mpg) C3a which requests the third server (s3.com) 33c to set up provision of the media data corresponding to the second foreground image (mov), to the third server 33c. Upon completion of setup for the media data, the third server 33c issues an acknowledge R30a indicating that the command C3a has been accepted, to the client terminal.

This acknowledge R30a includes an OK message (RTSP/1.0 OK) 31a indicating that the SETUP command C3a has been accepted, and additional information 32a. The additional information 32a includes (a=prebuffering:15s) information, in addition to sequence number (CSeq:2) information, session number (Session:12345678) information, and the like. The (a=prebuffering:15s) information indicates that the latency time from requesting the media data of the foreground image (mov) to displaying the foreground image is 15 seconds. The sequence number (CSeq:2) is assigned to onetime message exchange between the data transmission apparatus and the data reception apparatus, and the same sequence number is assigned to an issue of a command from the receiving terminal and to an acknowledge to the command from the server. Accordingly, although it is not shown in figure 10, a sequence number (CSeq:1) is given to the command (DESCRIBE rtsp://s3.com/mov.mpg) C2a and to the acknowledge R2a. The session number is assigned to the state where data transmission is allowed, established between the data transmission apparatus and the data reception apparatus.

Subsequently, the data reception apparatus 130b issues a command (DESCRIBE rtsp://s2.com/adv. mpg) C2b requesting specific information relating to the media data corresponding to the first foreground image (adv) (e.g., coding condition, existence of plural candidate data, etc.), to the second server (s2.com) 33b.

On receipt of the command C2b, the second server 33b issues an acknowledge R2b indicating that the command has been accepted, to the client terminal, and transmits SDP (Session Description Protocol) information to the client terminal.

Next, the data reception apparatus 130b of the client terminal issues a setup request command (SETUP rtsp://s2.com/ adv.mpg) C3b which requests the second server (s2.com) 33b to set up provision of the media data corresponding to the first foreground image (adv), to the second server 33b. Upon completion of setup for the media data, the second server 33b issues an acknowledge R30b indicating that the command C3b has been accepted, to the client terminal.

This acknowledge R30b includes an OK message (RTSP/1.0 OK) 31b indicating that the SETUP command C3b has been accepted, and additional information 32b. The additional information 32b includes (a=prebuffering:7s) information, in addition to sequence number (CSeq:2) information, session number (Session:12345688) information, and the like. The (a=prebuffering:7s) information indicates that the latency time from requesting the media data of the foreground image (adv) to displaying the foreground image is 7 seconds.

Thereafter, the data reception apparatus 130b of the client terminal issues a data request command (PLAY rtsp://s3.com/ mov.mpg) C4a requesting the media data (mov.mpg) corresponding to the second foreground image (mov), to the third server (s3.com) 33c, fifteen seconds before the display start time of the second foreground image (five seconds before the display start time of the entire scene). On receipt of this command C4a, the third server 33c issues an acknowledge (RTSP/1.0 OK) R4a indicating that the command C4a has been accepted, to the client terminal. Thereafter, the third server 33c stores the media data Dm2 corresponding to the second foreground image (mov.mpg) in RTP packets, and transmits the media data, packet by packet, to the client terminal.

Further, the data reception apparatus 130b of the client terminal issues a data request command (PLAY rtsp://s2.com/ adv.mpg) C4b requesting the media data (adv.mpg) corresponding to the first foreground image (adv), to the second server (s2.com) 33b, seven seconds before the display start time of the first foreground image (two seconds before the display start time of the entire scene). On receipt of this command C4b, the second server 33b issues an acknowledge (RTSP/ 1.0 OK) R4b indicating that the command C4b has been accepted, to the client terminal. Thereafter, the second server 33b stores the media data Dm1 corresponding to the first foreground image (adv.mpg) in RTP packets, and transmits the media data, packet by packet, to the client terminal.

Thereafter, the respective media data are output to the display unit 905 at the display start times to be displayed on the basis of the result of analysis performed on the SMIL data.

The above-described method of transmitting the information which indicates the latency time (prebuffering time) and is included in the control data (acknowledge of the server to the SETUP request from the receiving terminal) other than SMIL data, from the data transmission apparatus to the data reception apparatus, is very effective for contents whose initial delay time (i. e., latency time from requesting media data to the server to starting display of the media data) varies in real time (e.g., video of a concert which is broadcast live).

**Claims**

1.  A data reception apparatus for obtaining media data which is any of video data, audio data, and text data, and corresponds to plural elements constituting a scene, from data sources on a network, and playing the obtained media data to display the scene, said apparatus comprising:

    a first reception unit for receiving location information indicating the locations of the data sources having the respective media data on the network, first time information indicating the playback start times of the respective media data, and second time information for requesting the respective media data from the corresponding data source;
    a time setting unit for setting a data request time to make a request for each media data to the corresponding data source, at a time by a specific time set for each media data earlier than the playback start time of the media data, on the basis of the first and second time information;
    a data request unit for making a request for each media data to the data source indicating by the location information, at the data request time set by the time setting unit; and
    a second reception unit for receiving the media data supplied from the data source according to the request from the data request unit.

2.  The data reception apparatus of Claim 1:

    wherein said first reception unit receives, as the second time information, time information indicating a latency time from when each media data is received to when the media data is played; and
    said time setting unit sets the data request time for each media data, at a time by the latency time earlier than the playback start time of the media data.

3.  The data reception apparatus of Claim 1:

    wherein said first reception unit receives, as the second time information, time information indicating a time to make a request for each media data to the corresponding data source; and
    said time setting unit sets the data request time for each media data, at the time indicated by the second time information.

4.  The data reception apparatus of Claim 1:

    wherein said first reception unit receives, as the second time information, time information indicating a latency time from when each media data is received to when the media data is played; and
    said time setting unit sets the data request time for each media data, at a time by the sum of the latency time and a predetermined time earlier than the playback start time of the media data.

5.  The data reception apparatus of Claim 1:

    wherein said first reception unit receives, as the second time information, time information indicating a time to make a request for each media data to the corresponding data source; and
    said time setting unit sets the data request time for each media data, at a time by a predetermined time earlier than the time indicated by the second time information.

6.  A data reception method for obtaining media data which is any of video data, audio data, and text data, and corresponds to plural elements constituting a scene, from data sources on a network, and playing the obtained media data to display the scene, said method comprising:

    a first reception step of receiving location information indicating the locations of the data sources having the respective media data on the network, first time information indicating the playback start times of the respective media data, and second time information for requesting the respective media data from the corresponding data sources;
    a data request step of making a request for each media data to the data source indicating by the location information, at a time by a specific time set for each media data earlier than the playback start time of the media data, on the basis of the first and second time information; and
    a second reception step of receiving the media data supplied from the data source according to the request made in the data request step.

7.  The data reception method of Claim 6:

wherein said first reception step receives, as the second time information, time information indicating a latency time from when each media data is received to when the media data is played; and

said data request step makes a request for each media data to a predetermined data source, at a time by the latency time earlier than the playback start time of the media data.

**8.** The data reception method of Claim 6:

wherein said first reception step receives, as the second time information, time information indicating a data request time to make a request for each media data to the corresponding data source; and

said data request step makes a request for each media data to the data source, at the data request time.

**9.** The data reception method of Claim 6:

wherein said first reception step receives, as the second time information, time information indicating a latency time from when each media data is received to when the media data is played; and

said data request step makes a request for each media data to a predetermined data source, at a time by the sum of the latency time and a predetermined time earlier than the playback start time of the media data.

**10.** The data reception method of Claim 6:

wherein said first reception step receives, as the second time information, time information indicating a data request time to make a request for each media data to the corresponding data source; and

said data request step makes a request for each media data to the data source, at a time by a predetermined time earlier than the data request time.

**11.** A data transmission method for transmitting media data which is any of video data, audio data, and text data and corresponds to plural elements constituting a scene, to a reception terminal for playing the media data to display the scene, said method comprising:

a first transmission step of transmitting location information indicating the locations of data sources having the respective media data on a network, first time information indicating the playback start times of the respective media data, and second time information for requesting the respective media data from the corresponding data sources; and

a second transmission step of transmitting the media data to the reception terminal, according to the request for the media data which is issued from the reception terminal on the basis of the first and second time information and the location information.

**12.** The data transmission method of Claim 11, wherein said second time information is time information indicating a latency time from when each media data is received to when the media data is played.

**13.** The data transmission method of Claim 11, wherein said second time information is time information indicating a data request time to make a request for each media data to the corresponding data source.

**14.** A data storage medium containing a data playback program to make a computer perform a data playback process of obtaining media data which is any of video data, audio data, and text data, and corresponds to plural elements constituting a scene, from data sources on a network, and playing the obtained media data to display the scene, said data playback program comprising:

a first program to make the computer perform a first process of receiving location information indicating the locations of the data sources having the respective media data, first time information indicating the playback start times of the respective media data, and second time information for requesting the respective media data from the corresponding data sources;

a second program to make the computer perform a second process of making a request for each media data to the data source indicating by the location information, at a time by a specific time set for each media data earlier than the playback start time of the media data, on the basis of the first and second time information; and

a third program to make the computer perform a third process of receiving the media data supplied from the data source according to the data request.

**15.** A data storage medium which contains a data transmission program to make a computer perform a data transmission process of transmitting media data which is any of video data, audio data, and text data and corresponds to plural elements constituting a scene, to a reception terminal for playing the media data to display the scene, said data transmission program comprising:

a first program to make the computer perform a first process of transmitting location information indicating the locations of data sources having the respective media data on a network, first time information indicating the playback start times of the respective media data, and second time information for requesting the respective media data from the corresponding data sources; and

a second program to make the computer perform a second process of transmitting the media data to the reception terminal, according to the request for the media data which is issued from the reception terminal on the basis of the first and second time information and the location information.

EP 1 126 714 A2

Fig.1

25

# Fig.2

```
<smil>  ～ 210a

 <head>  ～ 220a

  <layout>  ～ 230a
                                              201

   <root-layout id="bg" width="300" height="200" />      202

   <region id="adv" left="0" top="150" width="300"
            height="50" />

   <region id="mov" left="50" top="0" width="200"
            height="150" />
                                                      203
  </layout>  ～ 230b

 </head>  ～ 220b

 <body>  ～ 240a

  <par>  ～ 250a
                                    204

   <video region="adv" src="rtsp://s2.com/adv.mpg"
            begin="5s" prebuffering="7s" />

   <video region="mov" src="rtsp://s3.com/mov.mpg"
            begin="10s" prebuffering="15s" />

  </par>  ～ 250b
                                    205
 </body>  ～ 240b

</smil>  ～ 210b
```

201a
202a
203a
204a
205a

SD1

Fig.3 (a)

Fig.3 (b)

Fig.4

| | # | time | control target | control command |
|---|---|------|----------------|-----------------|
| E1 | 1 | -5 | request unit | PLAY rtsp://s2.com/mov.mpg |
| E2 | 2 | -2 | request unit | PLAY rtsp://s2.com/adv.mpg |
| E3 | 3 | 0 | display unit | bg//width300/height200 |
| E4 | 4 | 5 | display unit | adv//left0/top150/width300/height50 |
| E5 | 5 | 10 | display unit | mov//left50/top0/width200/height150 |

Tab

# Fig.5

13c | s3.com

13b | s2.com

13a | s1.com

110

109 | display unit

GET http://s1.com/scene.smil — C1

HTTP/1.0 OK + scene.smil — R1

scene.smil

Ds1

scene.smil

DESCRIBE rtsp://s3.com/mov.mpg

RTSP/1.0 OK + SDP — C2a R2a

Ds1

SETUP rtsp://s3.com/mov.mpg

RTSP/1.0 OK — C3a R3a

DESCRIBE rtsp://s2.com/adv.mpg

RTSP/1.0 OK + SDP — C2b R2b

SETUP rtsp://s2.com/adv.mpg

RTSP/1.0 OK — C3b R3b

PLAY rtsp://s3.com/mov.mpg

-5

RTSP/1.0 OK — C4a R4a

mov.mpg (RTP packet)

Dm1

Dm1

PLAY rtsp://s2.com/adv.mpg

-2

RTSP/1.0 OK — C4b R4b

Dm2

adv.mpg (RTP packet)

Dm2

prebuffering=7s

prebuffering=15s

-0

5

Dm1

adv.mpg

10

mov.mpg

Dm2

T

## Fig.6

```
                                  ┌─────────────────────────┐  ╭╮ S501
                                  │   Set variable n at 0   │ ╱
                                  └─────────────────────────┘
                                              │
                          ┌───────────────────▼─────────────┐  ╭╮ S502
                          │   Select n-th media element      │ ╱
                          └──────────────────────────────────┘
                                              │
                          ┌───────────────────▼─────────────┐  ╭╮ S503
                          │   Set variables P, B as follows  │ ╱
                          │      P = prebuffering time        │
                          │      B = display start time       │
                          └──────────────────────────────────┘
                                              │
                          ┌───────────────────▼─────────────┐  ╭╮ S504
                          │      Calculate first set time     │ ╱
                          │   T1[n] = B-P-C (constant)        │
                          └──────────────────────────────────┘
                                              │
                          ┌───────────────────▼─────────────┐  ╭╮ S505
                          │   Calculate second set time       │ ╱
                          │        T2[n] = B                   │
                          └──────────────────────────────────┘
```

S507

n+1

S506

Calculate first set time
$T1[n] = B-P-C$ (constant)

Calculate second set time
$T2[n] = B$

Calculation of
set time is completed for all
video elements?

No

Yes

Enter set times $T1[n]$, $T2[n]$ ($n=0.1$)
and scene display start time
in time field of time table

S508

Fig.7

# Fig.8

```
<smil>  ～ 210a
  <head>  ～ 220a
    <layout>  ～ 230a                                                    201
    ┌─────────────────────────────────────────────────────────────┐
    │  <root-layout id="bg" width="300" height="200" />             │ ── 202
    └─────────────────────────────────────────────────────────────┘
201a ┌─────────────────────────────────────────────────────────────┐
    │  <region id="adv" left="0" top="150" width="300"              │
202a │          height="50" />                                       │
    └─────────────────────────────────────────────────────────────┘
    ┌─────────────────────────────────────────────────────────────┐
    │  <region id="mov" left="50" top="0" width="200"               │
203a │          height="150" />                                      │
    └─────────────────────────────────────────────────────────────┘
                                                                      203
    </layout>  ～ 230b
  </head>  ～ 220b
  <body>  ～ 240a
    <par>  ～ 250a                                      601
    ┌─────────────────────────────────────────────────────────────┐
    │  <video region="adv" src="rtsp://s2.com/adv.mpg"              │
601a │          begin="5s" request="-2s" />                          │
    └─────────────────────────────────────────────────────────────┘
    ┌─────────────────────────────────────────────────────────────┐
    │  <video region="mov" src="rtsp://s3.com/mov.mpg"              │
602a │          begin="10s" request="-5s" />                         │
    └─────────────────────────────────────────────────────────────┘
    </par>  ～ 250b                                      602
  </body>  ～ 240b
</smil>  ～ 210b
```

SD2

# Fig.9

23b
s3.com 23c
23a
s2.com
s1.com

display unit 905
130a

GET http://s1.com/scene.smil C1

HTTP/1.0 OK + scene.smil R1

scene.smil

Ds

scene.smil

Ds

DESCRIBE rtsp://s3.com/mov.mpg

RTSP/1.0 OK  R21a  C2a

...
V=0
...
m=video
a=prebuffering: 15s
...
R20a
R22a

SETUP rtsp://s3.com/mov.mpg C3a

RTSP/1.0 OK R3a

DESCRIBE rtsp://s2.com/adv.mpg

RTSP/1.0 OK  R21b  C2b

...
V=0
...
m=video
a=prebuffering: 7s
...
R20b
R22b

SETUP rtsp://s2.com/adv.mpg C3b

RTSP/1.0 OK R3b

PLAY rtsp://s3.com/mov.mpg C4a

-5

RTSP/1.0 OK R4a

mov.mpg
(RTP packet)
Dm2

Dm2

PLAY rtsp://s2.com/adv.mpg C4b

-2

RTSP/1.0 OK R4b

Dm1

adv.mpg
(RTP packet)

Dm1

T

# Fig.10

33c

33b    s3.com

33a    s2.com

s1.com

C1
GET http://s1.com/scene.smil

R1
scene.smil    HTTP/1.0 OK + scene.smil

Ds

scene.smil

DESCRIBE rtsp://s3.com/mov.mpg

Ds

C2a    R2a
RTSP/1.0 OK + SDP

SETUP rtsp://s3.com/mov.mpg

RTSP/1.0 OK }—R31a    C3a

CSeq: 2
Session: 12345678    R30a
prebuffering: 15s
...    R32a

DESCRIBE rtsp://s2.com/adv.mpg

C2b    R2b
RTSP/1.0 OK + SDP

SETUP rtsp://s2.com/adv.mpg

RTSP/1.0 OK }—R31b    C3b

CSeq: 2
Session: 12345688    R30b
prebuffering: 7s
...    R32b

C4a
PLAY rtsp://s3.com/mov.mpg

-5    R4a
RTSP/1.0 OK

mov.mpg
(RTP packet)    Dm2

Dm2

C4b
PLAY rtsp://s2.com/adv.mpg

-2    R4b
RTSP/1.0 OK

Dm1

adv.mpg    Dm1
(RTP packet)

T

130b    905

display
unit

Prior Art

Fig.11 (a)

Fig.11 (b)

# Fig.12   Prior Art

```
<smil>                                                    710a
  <head>                                                  720a
    <layout>                                              730a
                                                                        701
      <root-layout id="bg" width="300" height="200" />                      702
      <region id="adv" left="0" top="150" width="300"
              height="50" />
      <region id="mov" left="50" top="0" width="200"
              height="150" />
                                                                             703
    </layout>                                             730b
  </head>                                                 720b
  <body>                                                  740a
    <par>                                                 750a
                                                          704
      <video region="adv" src="rtsp://s2.com/adv.mpg"
             begin="5s" />
      <video region="mov" src="rtsp://s3.com/mov.mpg"
             begin="10s" />
    </par>                                                750b
                                                          705
  </body>                                                 740b
</smil>                                                   710b
```

701a
702a
703a

704a
705a

SD

# Fig.13  Prior Art

EP 1 126 714 A2

## Fig.14 Prior Art